# EUROPEAN PATENT APPLICATION

(11) **EP 0 950 970 A2**
(43) Date of publication of application: **20.10.1999**
(21) Application number: 99107019.4
(22) Date of filing: 09.04.1999
(51) Int. Cl.: G06F 17/60

(54) **Computer system for electronic shopping mall, electronic shopping mall control method, control program and medium**

(30) Priority: 13.04.1998 JP 10111298
(71) Applicant: Hitachi, Ltd., Chiyoda-ku, Tokyo 101-8010 (JP)
(72) Inventor: Honda, Yoshinori, Yokohama-shi (JP); Koike, Hiroshi, Maebashi-shi (JP); Matoike, Akira, Yokohama-shi (JP); Takeuchi, Satoshi, Yokohama-shi (JP)
(74) Representative: Strehl Schübel-Hopf & Partner

(57) **Abstract**

An electronic shopping mall server (1) connected to an electronic shopping mall client (3) has a coupon aggregation unit (108) for calculating a cost charge for each shop based on coupon issue and use record tables (121 - 124) and cost share definition tables (125 - 128). The client (3) defines cost share and registers the definition in the electronic mall server (1).

## Description

### BACKGROUND OF THE INVENTION

The present invention relates to an electronic shopping mall server and medium, and an electronic shopping mall system.

An electronic shopping mall system includes a server, at least one shop or store client (in this specification, the terms "shop" and "store" may be used interchangeably) and a plurality of end-user clients, all of which are interconnected through a network. An end user may manipulate an end-user client to connect on-line to the electronic shopping mall server for participating in so-called on-line shopping. A mall administrator and a plurality of shops exist in the electronic shopping mall. Each of the shops may be an independent business entity which sells products individually.

In an actual shopping center or the like, shops belonging to the shopping center may issue a point coupon or a discount coupon to provide end users with discount services. The point coupon is given to an end user in accordance with the amount of money paid for a purchase in a shop, such that the end user collects the point coupons over a plurality of purchases to exchange the point coupons with a certain gift or to allot the point coupons for a part of payment in a future purchase. The discount coupon in turn provides a discount off the price for a limited range of products. In actual shopping centers, such point coupons and discount coupons have been issued to provide end users with discount services. However, electronic shopping malls, which have recently been introduced into practical use, have not yet adopted such a coupon system, thus giving rise to a problem that an end user cannot benefit from services in accordance with the amount of money paid for purchases.

### SUMMARY OF THE INVENTION

It is an object of the present invention to provide an electronic shopping mall server capable of adopting a coupon system, and medium, an electronic shopping mall client, an electronic shopping mall system and a storage medium.

It is another object of the present invention to provide a computer system capable of presenting a variety of retail cost rebates in usage of coupons for an electronic mall system.

A computer system in accordance with the invention includes a first computer used by a mall administrator and issuing a coupon; a second computer used by a user receiving said coupon; and a third computer used by another user managing a shop where said coupon is used at said second computer, wherein a retail cost rebate is claimed between said mall administrator and said shop in accordance with an issue and usage of said coupon.

A server connected to a plurality of clients through a network in accordance with the invention includes a coupon management unit for defining a coupon effective to a plurality of shops, and for managing a coupon issued from one shop of said plurality of shops to a shop; and a coupon aggregation unit connected to said coupon management unit and responsive when said coupon is used by said user at a shop to calculate a retail cost rebate between said one shop and said other shop in accordance with a issue and use situation of said coupon.

A server connected to a plurality of clients of another aspect of the invention includes a coupon definition table defined by one client of a plurality of clients for holding coupon definition information received through said network; and a coupon aggregation unit responsive when a coupon issued on the basis of the contents of said coupon definition table is used by a user who uses another client of said plurality of clients at a shop managed by use of a further client, to calculate a retail cost rebate between a shop which issued a coupon and a shop where said coupon is used in accordance with an issue and use situation of said coupon.

A program file inputted to a server connected to a plurality of clients through a network in accordance with the invention includes a coupon management step of defining a coupon effective to a plurality of shops to manage a coupon issued from one shop which uses one client of said plurality of shops to a user who uses other client; and a coupon aggregation step of calculating, when said coupon is used by said user at another shop who uses a further client, a retail cost rebate between said one client and said further client in accordance with an issue and use situation of said coupon.

An electronic shopping mall server for providing a plurality of end-user clients and shop clients with on-line shopping functions may comprise a coupon management unit for managing issue and use of a coupon effective to a plurality of shops, and a coupon aggregation unit for calculating a cost charge for a shop which issued the coupon, or a cost repayment for a shop at which the coupon was used, based on an issue and use situation of the coupon managed by the coupon management unit.

With the configuration as described, cost share can be calculated on the basis of an issue and use situation of the coupon managed by the coupon management unit, thereby making it possible to use the coupon in an electronic shopping mall.

An electronic shopping mall client for sending information for an electronic shopping mall to an electronic shopping mall server to provide on-line shopping functions comprises a table editor for generating a definition table for defining a cost charge upon issuing a coupon effective to a plurality of shops, or a cost repayment when the coupon is used.

With the configuration as described, the table editor generates a cost share definition table to calculate cost share for each shop based on a coupon issue and use situation, thereby making it possible to use a coupon in the electronic shopping mall.

An electronic shopping mall system has an electronic shopping mall server connected to a plurality of end-user clients and shop clients for providing these clients with on-line shopping functions, wherein the electronic shopping mall clients each comprise a table editor for generating a definition table for defining a cost charge upon issuing a coupon effective to a plurality of shops, or a cost repayment when the coupon is used, wherein information on the cost charge or the cost repayment defined by the table editor is transferred to the electronic shopping mall, and the electronic shopping mall server comprises a coupon management unit for managing issue and use of a coupon effective to a plurality of shops, and a coupon aggregation unit for calculating a cost charge for a shop which issued the coupon, or a cost repayment for a shop at which the coupon was used, based on the coupon issue and use situation managed by the coupon management unit and the information on the cost charge or the cost repayment transferred from the electronic shopping mall clients.

With the configuration as described, cost share is calculated for each shop based on the coupon issue and use situation managed by the coupon management unit, thereby making it possible to use the coupon in the electronic shopping mall.

A storage medium for use in an electronic shopping mall server comprises a coupon management unit for managing issue and use of a coupon effective to a plurality of shops, and a coupon aggregation unit for calculating a cost charge for a shop which issued the coupon, or a cost repayment for a shop at which the coupon was used, based on the coupon issue and use situation managed by the coupon management unit.

A storage medium for use in an electronic shopping mall client comprises a table editor for generating a definition table for defining a cost share when a coupon effective to a plurality of shops was issued, or a cost repayment when the coupon was used.

### BRIEF DESCRIPTION OF THE DRAWINGS

Fig. 1 is a block diagram generally illustrating the configuration of an electronic shopping mall system according to an embodiment of the present invention;
Fig. 2 is a block diagram illustrating the configuration of a shop client for use in the electronic shopping mall system according to the embodiment of the present invention;
Fig. 3 is a flow chart illustrating the flow of processing for defining a discount coupon in a shop client of the electronic shopping mall system according to the embodiment of the present invention;
Fig. 4 is an explanatory diagram showing the structure of a product information table for use in the electronic shopping mall system according to the embodiment of the present invention;
Fig. 5 is an explanatory diagram showing the structure of a discount coupon definition table for use in the electronic shopping mall system according to the embodiment of the present invention;
Fig. 6 is an explanatory diagram showing the structure of a discount coupon cost share definition table for use in the electronic shopping mall system according to the embodiment of the present invention;
Fig. 7 is a flow chart illustrating the flow of processing for defining a point coupon in a shop client in the electronic shopping mall system according to the embodiment of the present invention;
Fig. 8 is an explanatory diagram showing the structure of a point coupon definition table for use in a shop client in the electronic shopping mall system according to the embodiment of the present invention;
Fig. 9 is an explanatory diagram showing the structure of a point coupon cost share definition table for use in the electronic shopping mall system according to the embodiment of the present invention;
Fig. 10 is an explanatory diagram showing the structure of a personal information table for use in the electronic shopping mall system according to the embodiment of the present invention;
Fig. 11 is a flow chart illustrating the flow of processing performed by an electronic shopping mall server 1 upon receipt of a server upload file for use in the electronic shopping mall system according to the embodiment of the present invention;
Fig. 12 is an explanatory diagram showing the structure of a product information table for use in the electronic shopping mall server of the electronic shopping mall system according to the embodiment of the present invention;
Fig. 13 is an explanatory diagram showing the structure of a point coupon definition table for use in the electronic shopping mall server of the electronic shopping mall system according to the embodiment of the present invention;
Fig. 14 is an explanatory diagram showing the structure of a discount coupon definition table for use in the electronic shopping mall server of the electronic shopping mall system according to the embodiment of the present invention;
Fig. 15 is a flow chart illustrating the flow of processing performed by an end-user client when an end-user "goes" shopping in the electronic shopping mall system according to the embodiment of the present invention;
Fig. 16 is a flow chart illustrating the flow of processing performed by the electronic shopping mall server during electronic shopping in the electronic shopping mall system according to the embodiment of the present invention;
Fig. 17 is a flow chart illustrating the flow of processing performed by an end-user client when an end user "goes" shopping in the electronic shopping mall system according to the embodiment of the present invention;
Fig. 18 is a flow chart illustrating the flow of processing performed by the electronic shopping mall server in response to a login request from an end-user client when an end user participate in the shopping in the electronic shopping mall system according to the embodiment of the present invention;
Fig. 19 is an explanatory diagram showing the structure of a record or log table for use in the electronic shopping mall server in the electronic shopping mall system according to the embodiment of the present invention;
Fig. 20 is a flow chart illustrating the flow of processing performed by a coupon management unit of the electronic shopping mall server when a request has been made for issuing a discount coupon in the electronic shopping mall system according to the embodiment of the present invention;
Fig. 21 is an explanatory diagram showing the structure of a discount coupon issue reason table for use in the electronic shopping mall server of the electronic shopping mall system according to the embodiment of the present invention;
Fig. 22 is an explanatory diagram showing the structure of a customer discount coupon table for use in the electronic shopping mall server of the electronic shopping mall system, according to one embodiment of the present invention;
Fig. 23 is an explanatory diagram showing the structure of a discount coupon issue record table for use in the electronic shopping mall server of the electronic shopping mall server according to the embodiment of the present invention;
Fig. 24 is a flow chart illustrating the flow of processing performed by a coupon management unit of the electronic shopping mall server when a request has been made for issuing a point coupon in the electronic shopping mall system according to the embodiment of the present invention;
Fig. 25 is an explanatory diagram showing the structure of a point coupon issue reason table for use in the electronic shopping mall server of the electronic shopping mall system according to the embodiment of the present invention;
Fig. 26 is an explanatory diagram showing the structure of a customer point coupon table for use in the electronic shopping mall server of the electronic shopping mall system according to the embodiment of the present invention;
Fig. 27 is an explanatory diagram showing the structure of a point coupon issue record table for use in the electronic shopping mall server of the electronic shopping mall system according to the embodiment of the present invention;
Fig. 28 is a flow chart illustrating the flow of processing performed by the electronic shopping mall server 1 when a request has been made for displaying information on possessed coupons in the electronic shopping mall system according to the embodiment of the present invention;
Fig. 29 is a flow chart illustrating the flow of processing performed by the electronic shopping mall server when a request has been made for a shop top page in the electronic shopping mall system according to the embodiment of the present invention;
Fig. 30 is a flow chart illustrating the flow of processing performed by the electronic shopping mall server when a request has been made for putting a product in a basket in the electronic shopping mall system according to the embodiment of the present invention;
Fig. 31 is an explanatory diagram showing the structure of a basket table for use in the electronic shopping mall server of the electronic shopping mall system according to the embodiment of the present invention;
Fig. 32 is a flow chart illustrating the flow of processing performed by the electronic shopping mall server when a request has been made for deleting a discount coupon from a basket in the electronic shopping mall according to the embodiment of the present invention;
Fig. 33 is a flow chart illustrating the flow of processing performed by the electronic shopping mall server when a request has been made for assigning a discount coupon to a basket in the electronic shopping mall system according to the embodiment of the present invention;
Fig. 34 is a flow chart illustrating the flow of processing performed by the electronic shopping mall server when a request has been made for payment with a point coupon in the electronic shopping mall system according to the embodiment of the present invention;
Fig. 35 is a flow chart illustrating the flow of processing performed by the electronic shopping mall server when a request has been made for registering a payment method and a delivery address in the electronic shopping mall system according to the embodiment of the present invention;
Fig. 36 is an explanatory diagram showing the structure of a discount coupon use record table for use in the electronic shopping mall server of the electronic shopping mall system according to the embodiment of the present invention;
Fig. 37 is an explanatory diagram showing the structure of a point coupon use record table for use in the electronic shopping mall server of the electronic shopping mall system according to the embodiment of the present invention;
Fig. 38 is a flow chart illustrating the flow of processing performed by the electronic shopping mall server when cost share for a discount coupon is aggregated in the electronic shopping mall system according to the embodiment of the present invention;
Fig. 39 is an explanatory diagram showing the structure of a discount coupon cost share definition table for use in the electronic shopping mall server of the electronic shopping mall system according to the embodiment of the present invention;
Fig. 40 is an explanatory diagram showing the structure of a discount coupon cost share table for use in the electronic shopping mall server of the electronic shopping mall system according to the embodiment of the present invention;
Fig. 41 is a flow chart illustrating the flow of processing performed by the electronic shopping mall server when cost share for a point coupon is aggregated in the electronic shopping mall system according to the embodiment of the present invention;
Fig. 42 is an explanatory diagram showing the structure of a point coupon cost share definition table for use in the electronic shopping mall server of the electronic shopping mall system according to the embodiment of the present invention; and
Fig. 43 is an explanatory diagram showing the structure of a point coupon cost share table for use in the electronic shopping mall server of the electronic shopping mall system according to the embodiment of the present invention.

### DETAILED DESCRIPTION OF THE EMBODIMENTS

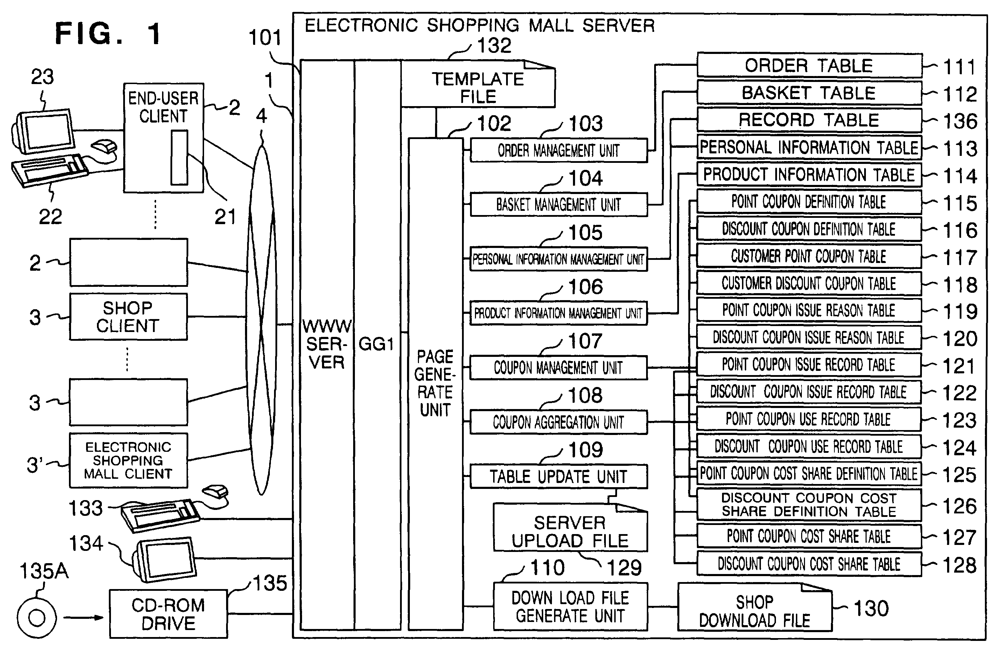

An electronic shopping mall system according to an embodiment of the present invention will hereinafter be described with reference to Figs. 1 to 43.

Referring first to Fig. 1, description will be made on the general configuration of the electronic shopping mall system according to this embodiment.

An electronic shopping mall server 1 is interconnected to a plurality of end-user clients 2, one or a plurality of shop clients 3, and an electronic shopping mall client 3' through a network 4 such as a public network or the like, and provides these clients with on-line shopping functions. The on-line shopping functions may include provision of information on products and services, acceptance of orders, a payment function, and so on which are provided through the network 4. The network 4 may be any of a broad-band ISDN network, a packet network, a dedicated line, LAN and so on.

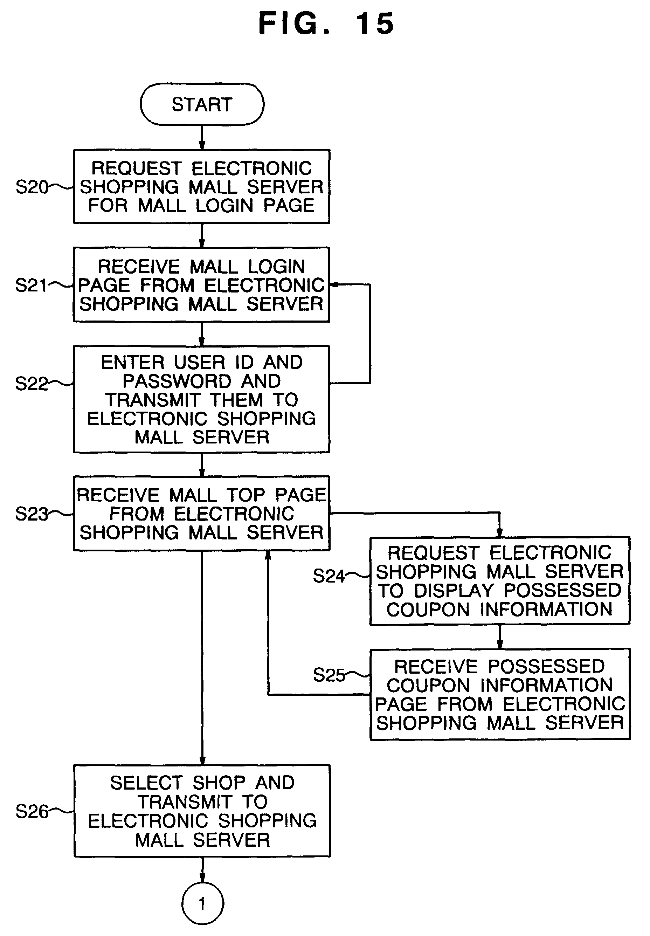

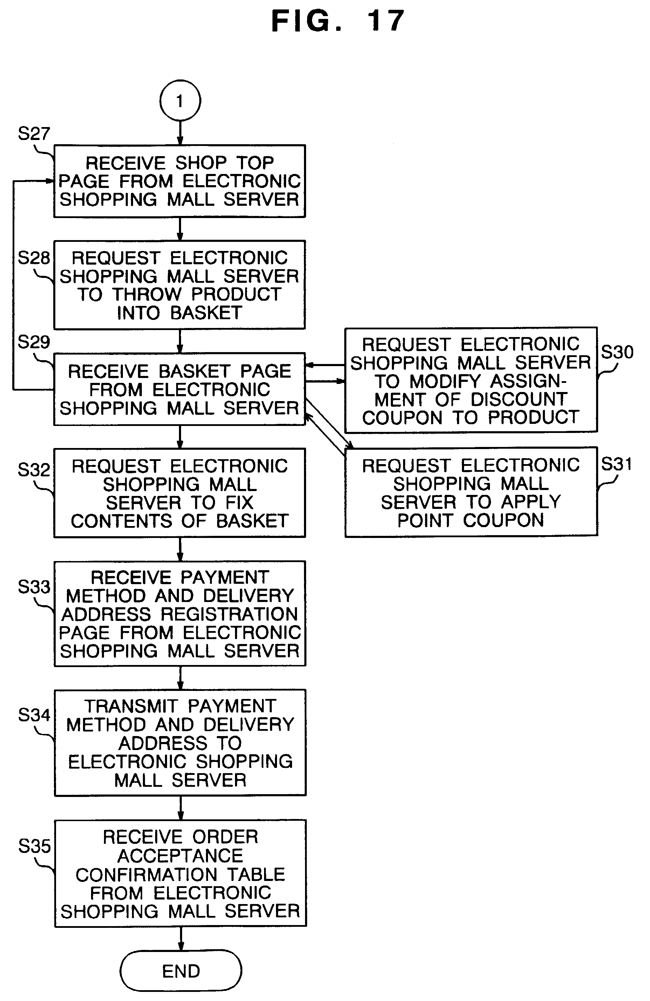

The end-user client 2 serves as a computer for an end-user to receive information provided from the electronic shopping mall server 1, and may be a workstation, a desk top personal computer, a note-type personal computer, a personal data assistant, PDA, or the like. The end-user client 2 also comprises a WWW browser 21, and an input device 22 such as a keyboard and an output device 23 such as a display which are connected to or built in the end-user client 2. Processing performed by the end-user client 2 will be described later with reference to Figs. 15 and 17.

The shop client 3 serves as a computer for generating information necessary for a shop to establish a virtual shop in the electronic shopping mall server 1 and for transferring the information to the electronic shopping mall server 1, as well as for receiving order information, log or record information and so on from the electronic shopping mall server 1. The shop client 3 may be implemented mainly by a workstation, a desk top personal computer, a note type personal computer, PDA, or the like.

An electronic shopping mall client 3' serves as a computer for use by an administrator of the electronic shopping mall server 1 to generate a variety of information required to operate the shopping mall, transferring such information to the electronic shopping mall server 1, and receiving log information or the like from the electronic shopping mall server 1. The electronic shopping mall client 3' may be implemented mainly by a workstation, a desk top personal computer, a note type personal computer, PDA, or the like.

In this embodiment, the following definitions are established in order to permit a coupon system such as a discount coupon, a point coupon or the like to be used in an electronic shopping mall. In the electronic shopping mall, a mall administrator, one or a plurality of shops, and a plurality of end users exist. Each of the shops is an independent business entity which may individually provide for sales of products. The following processing is required for such an operation that a discount coupon or a point coupon defined by the mall administrator is used in the shops:
(a) a shop which has issued point coupons defined by the mall administrator shall share a cost corresponding to the amount of issued point coupons to the mall administrator;
(b) when a point coupon defined by the mall administrator was used in payment for a purchased product at a shop, the shop may claim the amount of discount caused by the point coupon to the mall administrator; and
(c) when a discount coupon defined by the mall administrator was used in payment for a purchased product at a shop, the shop may claim the amount of discount caused by the discount coupon to the mall administrator.

A shop within a group may be allowed to generate a discount coupon or a point coupon which is only available to shops belonging to the group in the shopping mall. It will be understood that in such a case, the processing similar to the cost share and claims is also required in the relationship between a discount coupon defining shop or a point coupon defining shop and other shops. Specifically, (A) when a point coupon defined by the mall administrator of the electronic shopping mall or by a shop is issued to an end user in accordance with the amount of money paid for an order or in accordance with other criteria, a cost charge corresponding to the number of issued point coupons can be claimed in accordance with the number of issued points and a predetermined share rate (the amount of money per point); (B) when a point coupon was used in a shopping mall or at a shop belonging to the shopping mall, the administrator of the shopping mall or the shop where the point coupon was used can claim a due amount (cost repayment) to the party which has defined the point coupon in accordance with the number of used points and a predetermined share rate (the amount of money per point); and (C) when a discount coupon defined by the administrator of the shopping mall or by a shop was used at another shop, the shop at which the discount coupon was used can claim a due amount (cost repayment) to a coupon defining party in accordance with the amount of used discount coupon and a predetermined share rate (how many percent of a discounted amount).

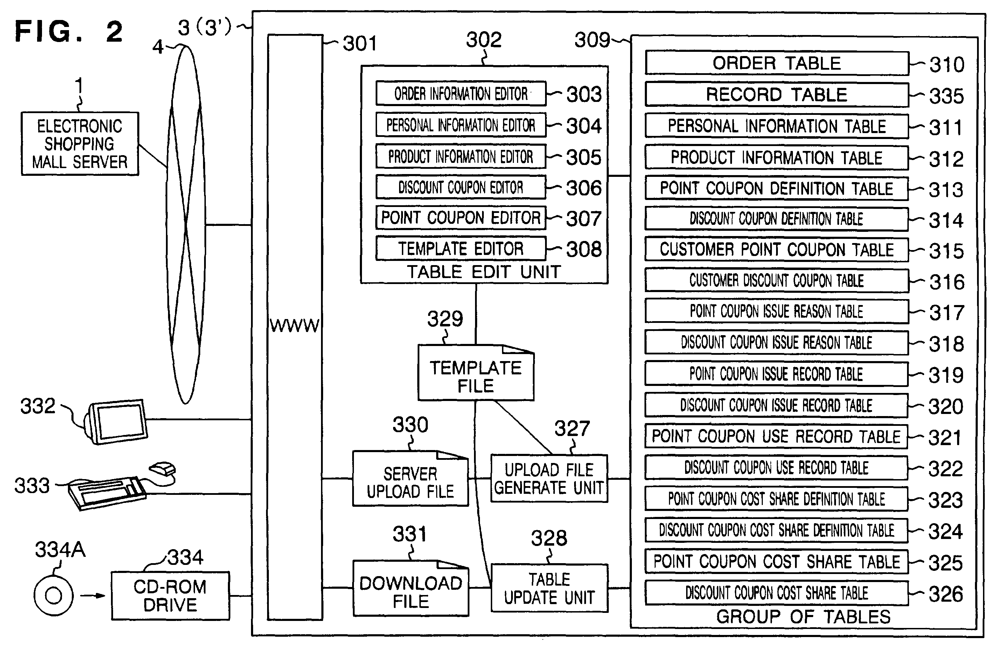

For this purpose, in this embodiment, the cost charge or the cost repayment have been previously determined by a point coupon editor 307 of the table editing unit 302 in each of the clients 3, 3' illustrated in Fig. 2 which generates a point coupon cost share definition table 323 or a discount coupon cost share definition table 324.

Also, a cost share of each shop is calculated by a coupon aggregation unit 108 based on a cost charge and cost repayment of each shop using issue record, use record and the point or discount coupon cost share definition tables managed by a coupon management unit 107 of the electronic shopping mall server 1.

Now, the configuration of the electronic shopping mall server 1 will be described with reference to Fig. 1.

A WWW server (World Wide Web server) 101 transmits a template file 132 to the end-user client 2, the shop client 3 and the electronic shopping mall client 3', when requested by them. Also, when the end-user client 2, the shop client 3 or the electronic shopping mall client 3' requests the electronic shopping mall server 1 to execute a particular script, the WWW server 101 starts a page generation unit 102 through a common gateway interface (CGI).

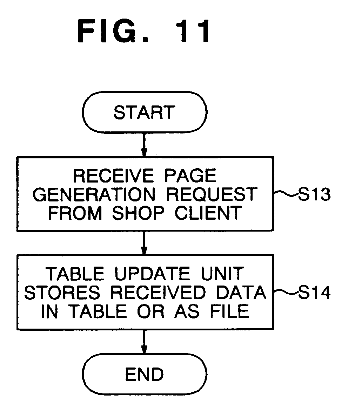

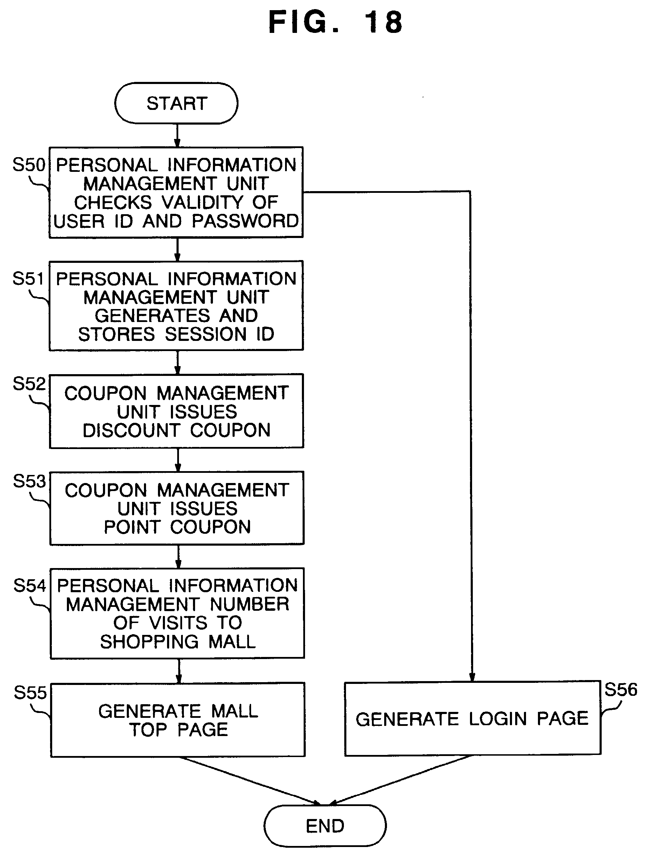

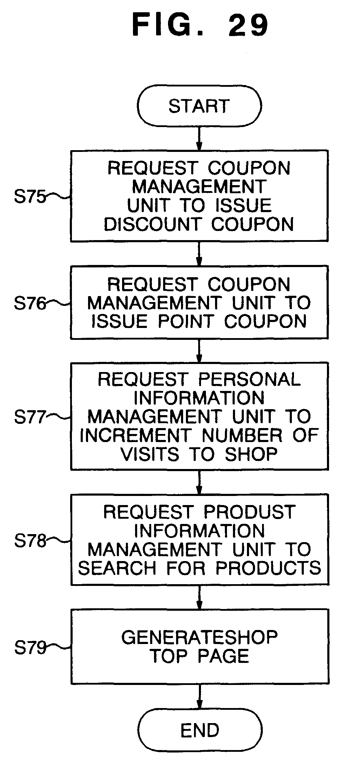

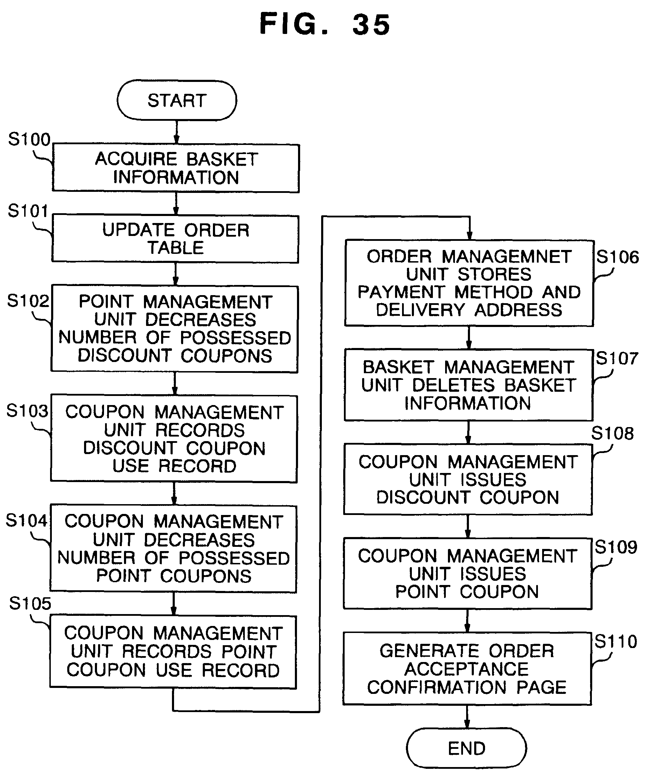

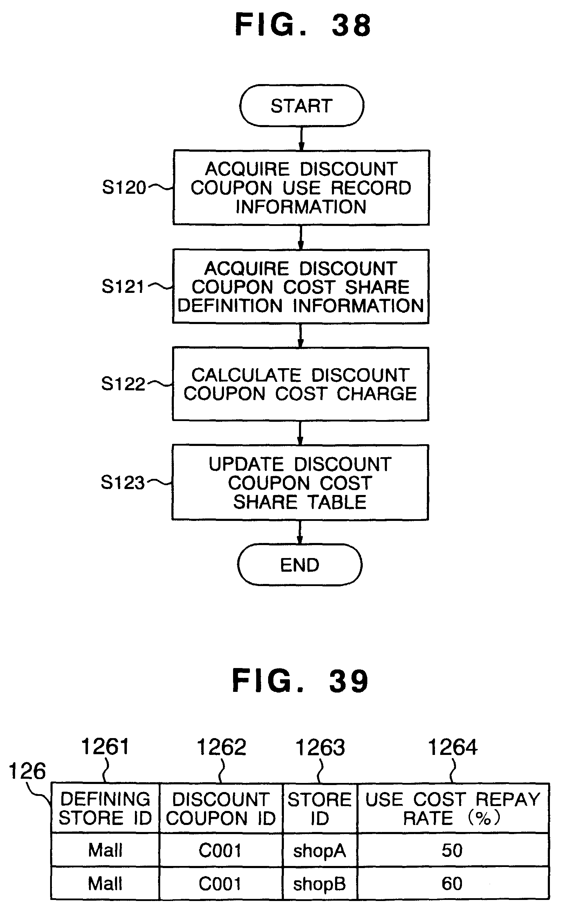

The page generation unit 102 interprets scripts in the template file 132 specified by the end-user client 2, the shop client 3 or the electronics shopping mall client 3' to execute an order management unit 103 (later described in Fig. 35); a basket management unit 104 (later described in Fig. 35); a personal information management unit 105 (later described in Fig. 18); a product information management unit 106 (later described in Fig. 29); a coupon management unit 107 (later described in Figs. 18, 20, 24); the coupon aggregation unit 108 (later described in Fig. 38); a table update unit 109 (later described in Fig. 11); and a download file generate unit 110, and generates a hyper text mark-up language (HTML) file which is returned to the WWW server 101.

In this embodiment, a client-to-server communication is not limited to Hyper Text Transport Protocol (HTTP) between the WWW server 101 and the WWW browser, but may conform to any protocol as long as it can send instructions to appropriately execute respective functions described below and return information on execution results.

The order management unit 103 manages an order table 111, details of which will be described later with reference to Fig. 35.

The basket management unit 104 manages a basket table 112, details of which will be described later with reference to Fig. 35.

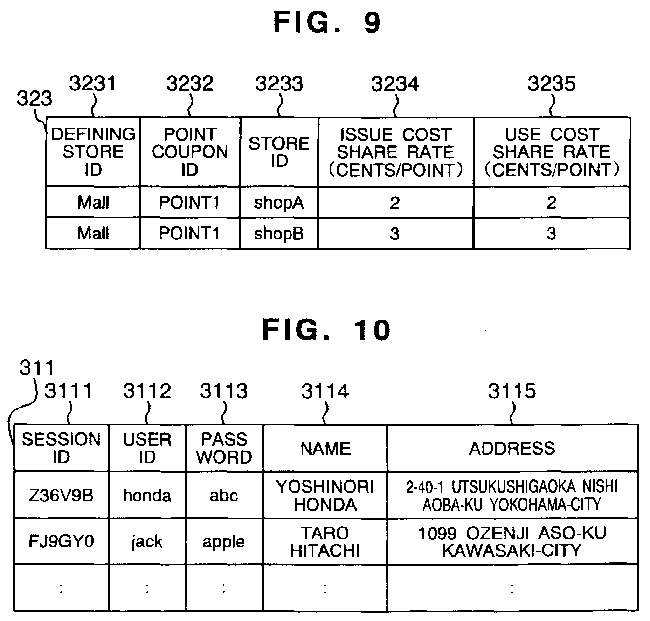

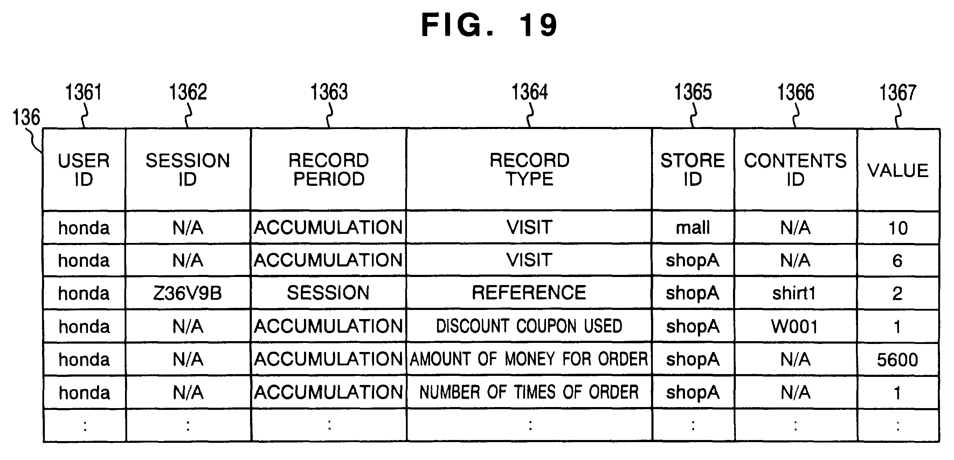

The personal information management unit 105 manages a personal information table 113 (similar to a personal information table 313 in Fig. 10) and a record table 136 (later described in Fig. 19), details of which will be described later with reference to Fig. 18.

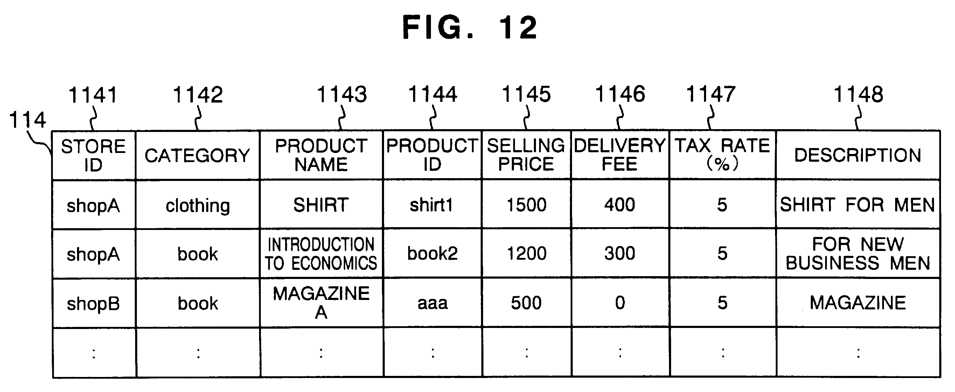

The product information management unit 106 manages a product information table 114 (later described in Fig. 12), details of which will be described later with reference to Fig. 29.

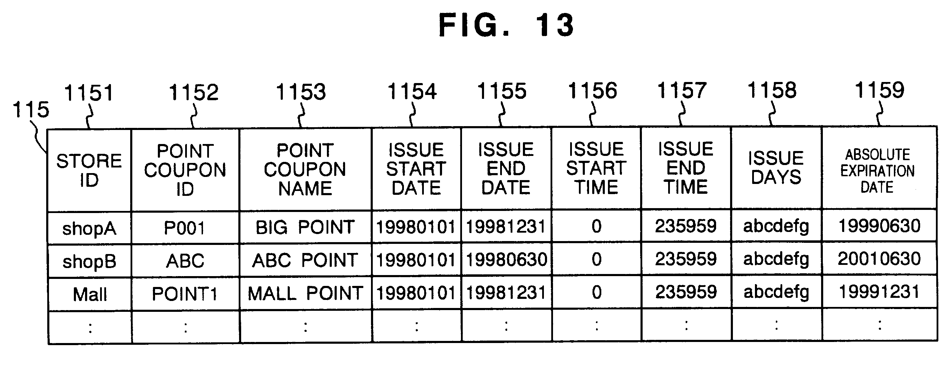

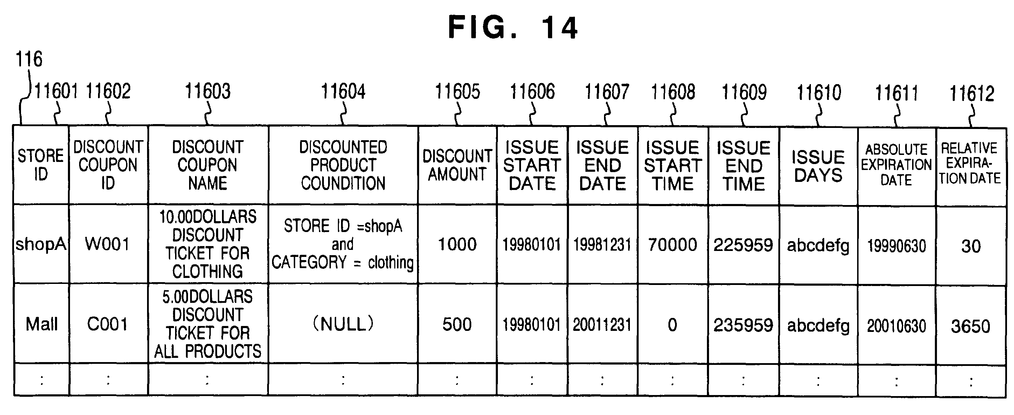

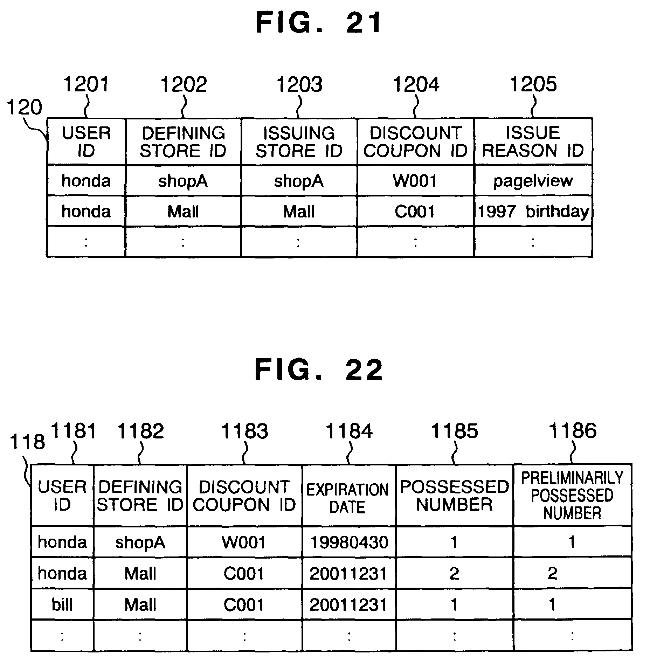

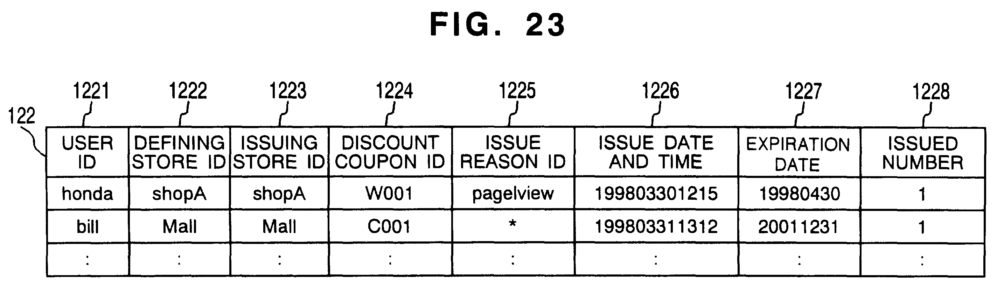

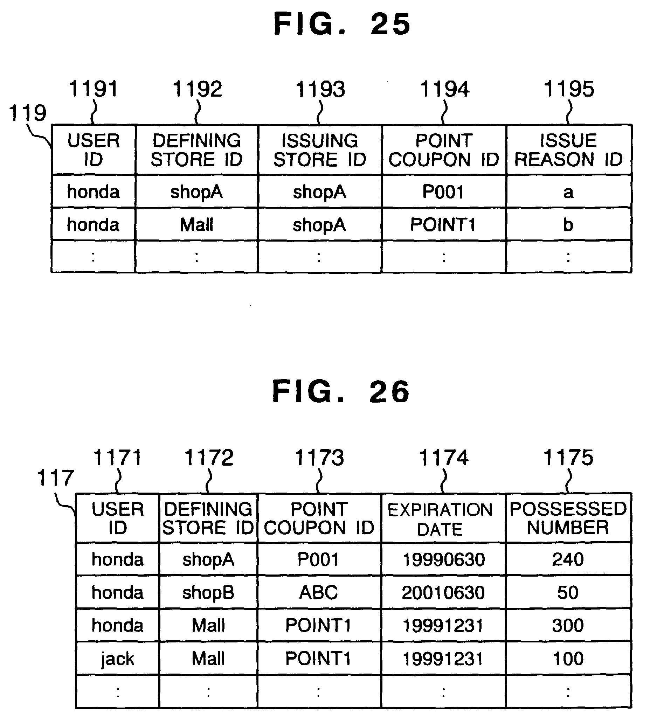

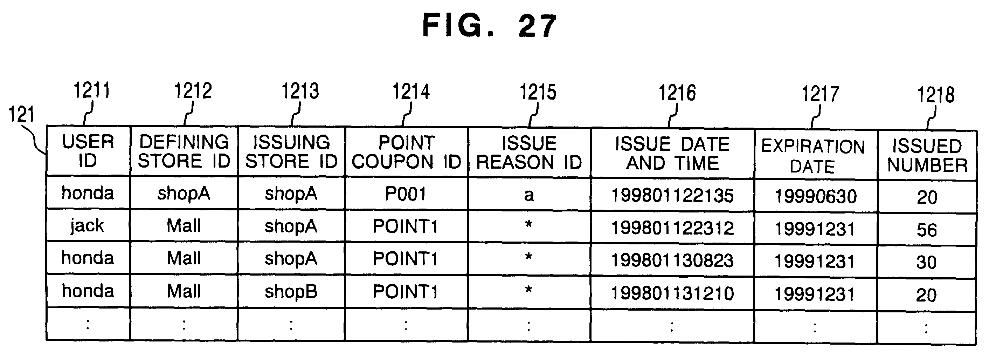

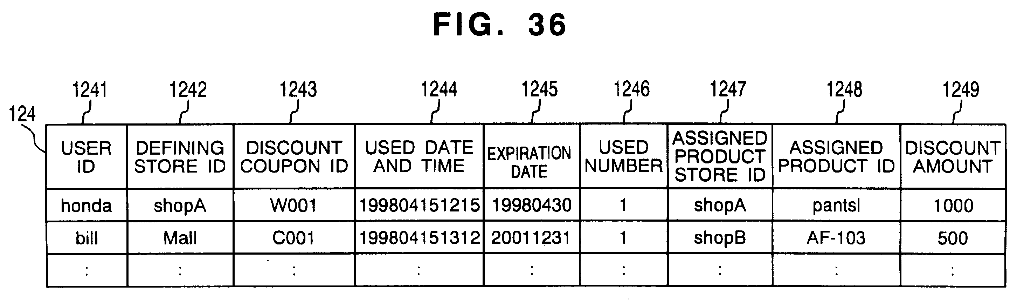

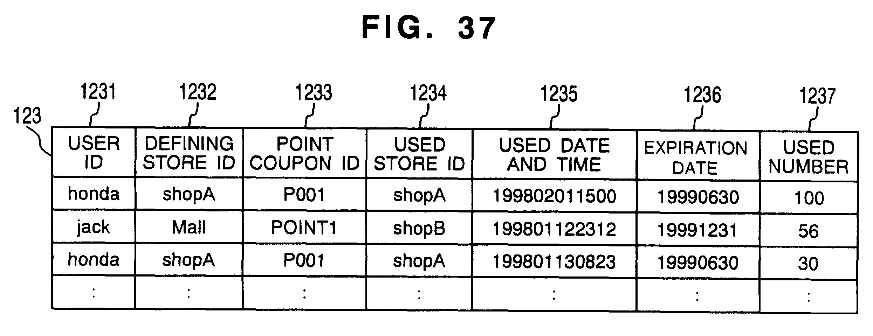

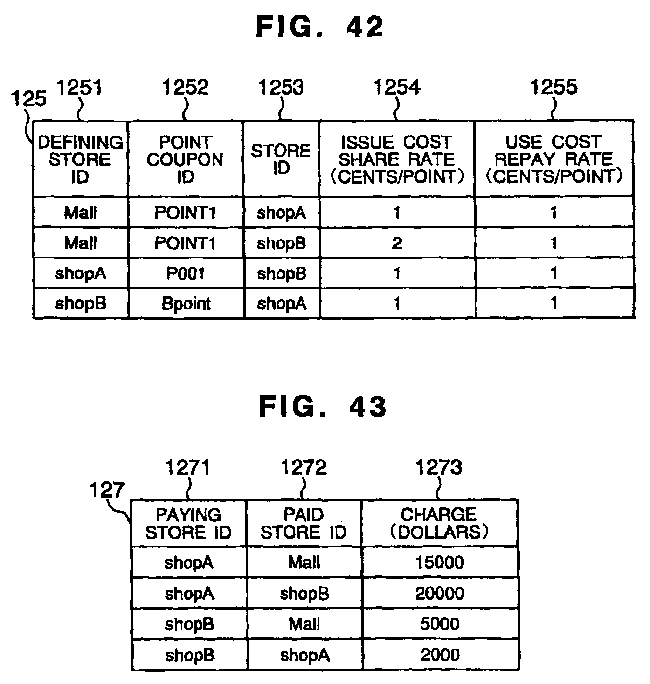

The coupon management unit 107 manages a point coupon definition table 115 (later described in Fig. 13); a discount coupon definition table 116 (later described in Fig. 14); a customer point coupon table 117 (later described in Fig. 26); a customer discount coupon table 118 (later described in Fig. 22); a point coupon issue reason table 119 (later described in Fig. 25); a discount coupon issue reason table 120 (later described in Fig. 21); a point coupon issue record table 121 (later described in Fig. 27); a discount coupon issue record table 122 (later described in Fig. 23); a point coupon use record table 123 (later described in Fig. 37); a discount coupon use record table 124 (later described in Fig. 36); a point coupon cost share definition table 125 (later described in Fig. 42); and a discount coupon cost share definition table 126 (later described in Fig. 39). Details of the coupon management unit 107 will be described later with reference to Fig. 35. It goes without saying that any table associated with an unused coupon can be omitted from the discount coupon related tables and the point coupon related tables mentioned above. Within a multiplicity of tables mentioned above, the point coupon or discount coupon definition table 115 or 116, and the point coupon or discount coupon cost share definition table 125 or 126 are indispensable for implementing the present invention, whereas the remaining tables may be omitted depending on a particular design.

The coupon aggregation unit 108 manages a point coupon cost share table 127 and a discount coupon cost share table 128 using the point coupon issue record table 121; the discount coupon issue record table 122; the point coupon use history record 123; the discount coupon use record table 124; the point coupon cost share definition table 125 and the discount coupon cost share definition table 126. Details of the coupon aggregation unit 108 will be described later with reference to Fig. 35.

The table update unit 109 stores a server upload file 129 received from the shop client 3 and the electronic shopping mall client 3' in tables 111, ..., 128 or stores them as template files 132.

The download file generate unit 110 converts the tables 111, ..., 128 to a download file 130 for transmitting to the shop client 3.

The electronic shopping mall server 1 is connected to an input device 133 such as a keyboard or the like; an output device 134 such as a display or the like; and a removable storage device 135 such as a CD-ROM drive or the like. The removable storage device 135 reads a program for the electronic shopping mall server 1 from a storage medium 135A such as a CD-ROM which contains the program. Instead of the storage device, the electronic shopping mall server 1 may be operated by receiving such a program from a predetermined program provider through a communication channel (not shown) or the network 4.

Next, the configuration of the shop client 3 for use in the electronic shopping mall system of this embodiment will be described with reference to Fig. 2. It should be noted that the electronic shopping mall client 3' may also have a similar configuration.

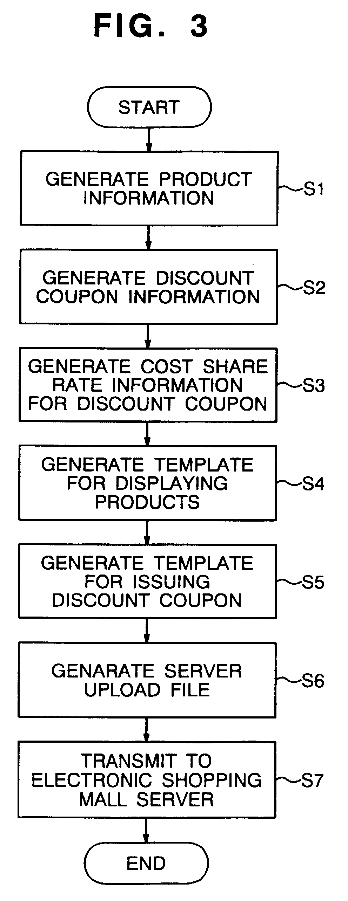

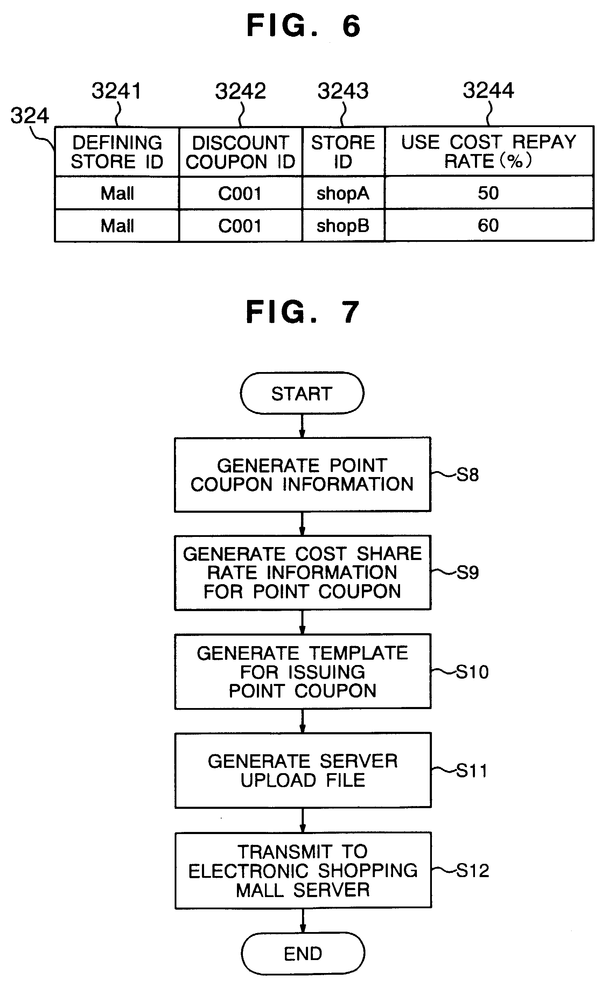

A table edit unit 302 includes an order information editor 303; a personal information editor 304 (later described in Fig. 3); a product information editor 305; a discount coupon editor 306 (later described in Fig. 3); a point coupon editor 307 (later described in Fig. 7); and a template editor 308 (later described in Fig. 3), and generates a group of tables 309 and a template file 329 (later described in Figs. 3, 7).

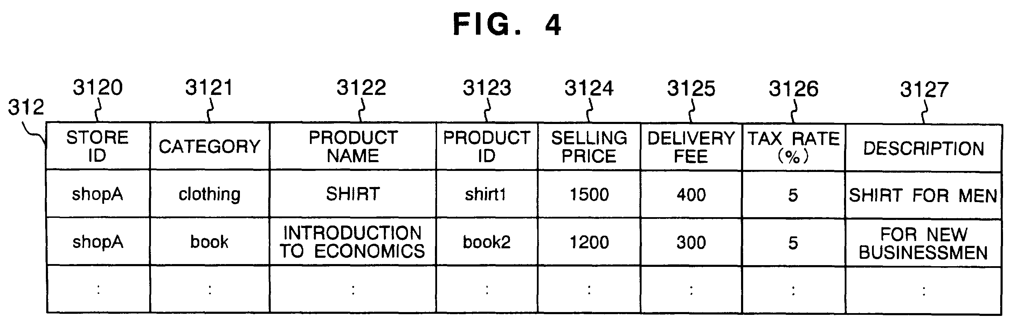

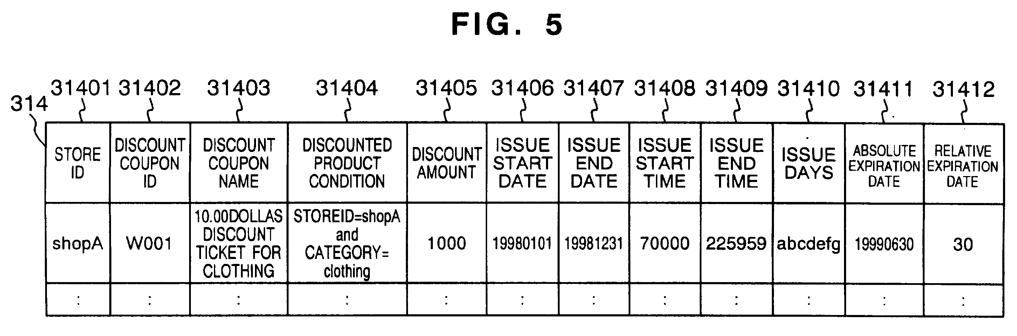

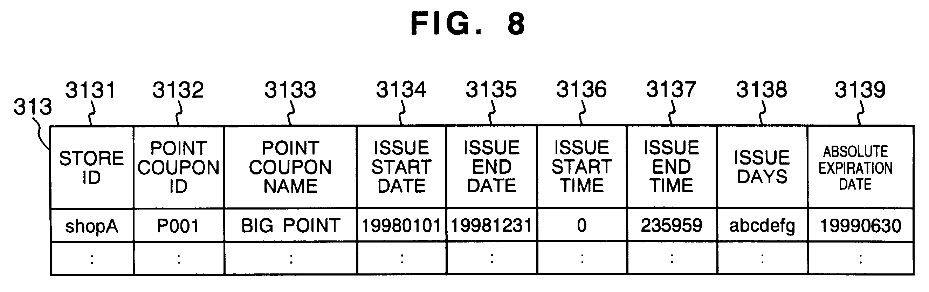

The group of tables 309 includes an order table 310; a record table 335; a personal information table 311 (later described in Fig. 10); a product information table 312 (later described in Fig. 4); a point coupon definition table 313 (later described in Fig. 8); a discount coupon definition table 314 (later described in Fig. 5); a customer point coupon table 315; a customer discount coupon table 316; a point coupon issue reason table 317; a discount coupon issue reason table 318; a point coupon issue record table 319; a discount coupon issue record table 320; a point coupon use record table 321; a discount coupon use record table 322; a point coupon cost share definition table 323 (later described in Fig. 9); a discount coupon cost share definition table 324 (later described in Fig. 6); a point coupon cost share table 325; and a discount coupon cost share table 326.

An upload file generate unit 327 generates a server upload file 330 from the group of tables 309 and the template file 329. Details of the upload file generate unit 327 will be described in step S6 in Fig. 3.

A table update unit 328 updates the group of tables 309 and the template file 329 using the download file 331.

The WWW browser 301 transmits the server upload file 330 to the electronic shopping mall server 1, and receives the download file 331 from the electronic shopping mall server 1.

The shop client 3 is connected to an input device 333 such as a keyboard or the like; an output device 332 such as a display; and a removable storage device 334 such as a CD-ROM drive or the like. The removable storage device 334 reads a program for the shop client 3 from a storage medium 334A such as a CD-ROM which contains such a program. Alternatively, the program may be inputted to the shop client 3 through a communication channel. The table edit unit 302 illustrated in Fig. 2 is required for defining a coupon. For permitting the electronic shopping mall server 1 illustrated in Fig. 1 to define a coupon, the server 1 may be provided therein with a similar table edit unit. Correspondingly, it goes without saying that the electronic shopping mall client 3' may be omitted if the electronic shopping mall client 3' need not give definitions to a coupon.

In the following, description will be made on operations involved in building a shop within the electronic mall server 1 using the shop client 3 with reference to Figs. 3 to 6.

First, the flow of processing in the shop client 3 when a discount coupon is defined will be described with reference to Fig. 3.

### 〈Step S1〉

The shop client 3 generates a product information table 312 using the product information editor 305.

Referring now to Fig. 4, description will be made on the structure of the product information table 312.

The product information table 312, which defines products sold in and services provided in the electronic shopping mall server 1, comprises the following fields: *store ID* 3120, *category* 3121; *product name* 3122; *product ID* 3123; *selling price* 3124; *delivery fee* 3125; *tax rate* 3126; and *description* 3127.

*Store ID* 3120 is an identifier for specifying a shop within the electronic shopping mall server 1. In the example shown herein, when a shop labelled "shopA" has generated a product information table 312 using the product information editor 304 of the shop client 3, "shopA" is entered in *store ID* 3120 of the shop.

*Category* 3121 indicates the category of a product which is set by a shop. For example, "clothing" or "book" may be set in *category* 3121 as shown.

*Product name* 3122 indicates the name of the product, and "shirt" or "Introduction to Economics", for example, may be set therein as shown.

*Product ID* 3123 is an identifier for specifying the product within a shop, and "shirt 1" or "book 2" may be set therein. A combination of *store ID* 3120 and *product ID* 3123 associated with a product is made unique within products registered in the electronic shopping mall server 1.

*Selling price* 3124 indicates the price of the product, while *delivery fee* 3125 indicates a delivery fee per product when the product(s) is delivered to a purchaser.

*Tax rate* 3126 indicates the rate of tax in percent which is charged when the product is ordered. Also, *Description* 3127 provides the end user with detailed description on the product.

Step S1 serves as a step for defining products which are discounted with a discount coupon defined in the next step S2. Step S1 is not needed if such products have already been defined, or if a shop which does not sell products, for example, the shopping mall administrator defines a discount coupon using the electronic shopping mall client 3'.

### 〈Step S2〉

The shop client 3 generates a discount coupon definition table 314 using the discount coupon editor 306.

Referring now to Fig. 5, description will be made on the structure of the discount coupon definition table 314. The discount coupon definition table 314 shown in Fig. 5 defines a discount coupon which is effective only in a shop which has store *ID* 31401 set to "shopA".

*Store ID* 31401 specifies a shop. In this example, "shopA" is set in store *ID* 31401.

*Discount coupon ID* 31402 is an identifier for specifying a discount coupon within the shop. For example, "shopA" issues a discount coupon labelled "W001" in the example shown. A combination of store *ID* 31401 and *discount coupon ID* 31402 is unique within discount coupons registered in the electronic shopping mall server 1.

*Discount coupon name* 31403 indicates the name of the discount coupon. For example, "10.00 dollars discount ticket for closing" is set in this field.

*Discounted product condition* 31404 indicates conditions which must be satisfied by a product to which the discount coupon is effective. "*Store ID* = shopA and *category* =closing" set in *discounted product condition* 31404 indicates that a discount coupon is effective only to products which has "shopA" in store *ID* 3120 and "closing" in *category* 3121. "Effective" herein means that a discount coupon possessed by a shop may be assigned to a product, which an end user is going to order, to discount the selling price. It should be noted that step S1 is required only when product falling within *discounted product condition* 31404 of the discount coupon have not been defined.

*Discount amount* 31405 indicates a maximum value of discount amount when the discount coupon is assigned to a product. When the selling price of a product is lower than the value in *discount amount 31405*, an actual discount amount is equal to the selling price of the product.

*Issue start date* 31406 indicates the first day at which the discount coupon can be issued. The shown example indicates that the discount coupon can be issued from "January 1, 1998". "Issue of a discount coupon" means that a shop or the shopping mall allows end users to have a particular discount coupon.

*Issue end date* 31407 indicates the last day at which the discount coupon can be issued. The shown example indicates that the discount coupon can be issued until "December 31, 1998".

*Issue start time* 31408 indicates the starting time from which the discount coupon can be issued. The shown example indicates that the discount coupon can be issued from "7:00:00" (indicated in hours, minutes and seconds).

*Issue end time* 31409 indicates the end time to which the discount coupon can be issued. The shown example indicates that the discount coupon can be issued until "22:59:59".

*Issue day* 31410 indicates a day or days of week on which the discount coupon can be issued, where "a" - "g" correspond to Monday to Sunday. In the example shown herein, *issue day* 31410 indicates "abcdefg", thus showing that the discount coupon can be issued over the entire week from Monday to Sunday.

*Absolute expiration date* 31411 indicates the last day on which the discount coupon can be used. The shown example indicates that the discount coupon can be used until "June 30, 1999". "Use of a discount coupon" has the same meaning as application of the discount coupon to a product.

*Relative expiration date* 31412 indicates a term in which the discount coupon can be used after the issue. The shown example indicates that the discount coupon can be used for "30 days". Upon issuing the discount coupon, *absolute expiration date* 31411 is compared with the sum of the issue date and *relative expiration date* 31412, and the one nearer to the date of issue is selected as the actual expiration date.

### 〈Step S3〉

The shop client 3 generates a discount coupon cost share definition table 324 using the discount coupon editor 306.

Referring now to Fig. 6, description will be made on the structure of the discount coupon cost share definition table 324.

The discount coupon cost share definition table 324 is used when a discount coupon defined by a shop (X) was used at another shop (Y) for defining the amount of money paid by (X) to (Y) as a rate of discount amount. 〈Step S3〉 is not required when a discount coupon defined by a shop is not available at shops other than the shop which has issued it. For example, as shown in Fig. 5, the discount coupon "W001" issued by a shop (A) (*store ID* = "shopA") has *discounted product condition* set to "*store ID* = shopA and *category* = clothing", so that the discount coupon "W001" is only effective to a product which has set store *ID* 3120 to "shopA" and *category* 3121 to "clothing". It will be thus understood that the discount coupon "W001" can be used only in the issuing shop (shop-A) itself.

On the other hand, the shopping mall administrator itself responsible for managing the electronic shopping mall server 1, although not selling any product, can issue a discount coupon or a point coupon. Therefore, when the electronic shopping mall administrator has issued a discount coupon, which is available over all shops within the electronic shopping mall, using the electronic shopping mall client 3', the discount coupon cost share definition table 324 shown in Fig. 6 indicates a percent of a discount amount which is the amount of money paid by the administrator of the electronic shopping mall to another shop (Y) when the discount coupon is used in the shop (Y). Also, the discount coupon cost share definition table 324 can be set when a certain shop issues a discount coupon which is effective in a plurality of shops.

Referring now to Fig. 6, description will be made on the structure of the discount coupon cost share definition table 324.

Fig. 6 is an explanatory diagram showing the structure of the discount coupon cost share definition table for use in the electronic shopping mall system according to the embodiment of the present invention.

Referring specifically to Fig. 6, *defining store ID* 3241 indicates the store ID of a party which has defined an associated discount coupon. In the example shown herein, *defining store ID* 3241 is "Mall", where a character string "Mall" is a reserved word in the electronic shopping mall server 1, and the shopping mall administrator responsible for managing the electronic mall server 1 can only use "Mall" as the store ID. Therefore, when the *defining store ID* 3241 is set to "Mall", this defines to mean a discount coupon issued by the electronic shopping mall administrator itself.

*Discount coupon ID* 3242 is an ID for specifying a discount coupon. The shown example specifies a discount coupon labelled "C001".

*Store ID* 3243 indicates the store ID of a shop at which the discount coupon was used.

*Use cost repayment rate* 3244 defines the amount of money repaid from a shop (X) to another shop (Y) at a later time in percent of a discount amount of a discount coupon, when the discount coupon defined by (X) is used at (Y). The shown example indicates that when a discount coupon defined by *defining store ID* 3241="Mall" is used in a shop (shop-A), the rate of cost repaid from "Mall" to "shopA" is "50%" of the discount amount.

This relation also applies other than that between the shopping mall and a shop. For example, when a plurality of shops within shops belonging to the shopping mall are associated in a group such that a common discount coupon is available in the group, one shop (C) defining the common discount coupon acts as an operation responsible shop for this discount coupon. This discount coupon can be issued only by the shop (C). When this discount coupon is used at another shop in the group, the shop (C) will pay the amount of money based on a cost repayment rate defined in *use cost repayment rate* 3244 to the shop at which the discount coupon is used.

### 〈Step S4〉

The shop client 3 generates a template file 329 for displaying products using the template editor 308. The template file 329 is interpreted by the page generate unit 102 of the electronic shopping mall server 1 to start the order management unit 103; the basket management unit 104; the personal information management unit 105; the product information management unit 106; the coupon management unit 107; the coupon aggregation unit 108; the table update unit 109; and the download file generate unit 110 to generate an HTML file. The template file 329 for displaying products is an HTML file generating script which includes instructions for starting the product information management unit 105 to acquire product information. Step S4 is not necessarily required except that a page for displaying products is changed.

### 〈Step S5〉

The shop client 3 generates a template file 329 for issuing a discount coupon using the template editor 308. The template file 329 for issuing a discount coupon describes which of discount coupons defined in step S2 and step S3 is issued to which of end users in which conditions. The template file 329 for issuing a discount coupon includes processing for determining a discount coupon to be issued and coupon management unit call processing.

As the processing for determining a discount coupon to be issued, a script stating, for example, "if Number of Visits to Shopping Mall = 1, then one discount coupon with *store ID* = Mall, *discount coupon ID* = C001 is issued with *issue reason ID* = FirstVisit" is described on the top page of the electronic shopping mall. The issuing condition "if ..., then ..." may be "if today is 19980101 - 19980108" or the like. As another issuing pattern, for example, a script stating "if Number of Visits to This Store = 1, then ...." may be described on a top page of a shop, or a script stating "if *product ID* of Currently Displayed Product = ****, then ....", or a script stating "if a page of a product with *product ID* = *** is displayed three times, then ...." is described in a product information description page to change the kind and number of a discount coupon to be issued in accordance with log information. The log information is stored in the personal information table 113. Alternatively, a script stating "if the amount of money for an order is 100.00 dollars or more" or "if *Product ID* = *** is ordered" may be described on an order processing page to change the kind and number of a discount coupon to be issued in accordance with the amount of money for an order or an ordered product. Step S5 is not always required since the administrators of shops are allowed to manually issue discount coupons through a special issue template other than the issue of discount coupon responsive to the executions of these templates.

### 〈Step S6〉

The upload file generate unit 327 of the shop client 3 generates a server upload file 330 from the product information table 312; the discount coupon definition table 314; the discount coupon cost share definition table 324; and the template file 329 which have been generated in Steps S1 - S5. The server upload file 330 is a collection of information in the respective tables and the template file generated in the form of a file, and may further be encrypted.

### 〈Step S7〉

The shop client 3 communicates with the WWW server 101 of the electronic shopping mall server 1 using the WWW browser 301 to display an upload page. Then, the shop client 3 transmits the server upload file 330 to the WWW server 101 using a POST method of HTTP.

Thus, the shop client 3 terminates the processing associated with the definition of a discount coupon. The electronic shopping mall client 3' also performs such processing in a similar manner.

Next, operations involved in building a point coupon of a shop within the electronic shopping mall server 1 using the shop client 3 will be described with reference to Figs. 7 to 9.

First, the flow of processing in the shop client 3 when a point coupon is defined will be described with reference to Fig. 7.

### 〈Step S8〉

The shop client 3 generates a point coupon definition table 313 using the point coupon editor 307. The point coupon definition table 313 shown in Fig. 8 defines a point coupon which is effective only in a shop with *store ID* 3131 set to "shopA".

Referring now to Fig. 8, description will be made on the structure of the point coupon definition table 313.

*Store ID* 3131 specifies a shop. In this example, "shopA" is set in *store ID* 3131.

*Point coupon ID* 3132 is an identifier for specifying a point coupon within the shop. For example, in the example shown herein, "shopA" issues a point coupon labelled "P001". A combination of *store ID* 3131 and *point coupon ID* 3132 is unique within point coupons registered in the electronic shopping mall server 1.

*Point coupon name* 3133 indicates the name of the point coupon. For example, the name may be set such as "Big Point" in this field.

*Issue start date* 3134 indicates the first day at which the point coupon can be issued. The shown example indicates that the point coupon can be issued from "January 1, 1998". "Issue of a point coupon" means that a shop or the shopping mall allows end users to have a particular point coupon.

*Issue end date* 3135 indicates the last day at which the point coupon can be issued. The shown example indicates that the point coupon can be issued until "December 31, 1998".

*Issue start time* 3136 indicates the starting time from which the point coupon can be issued. The shown example indicates that the point coupon can be issued from "7:00:00" (indicated in hours, minutes and seconds).

*Issue end time* 3137 indicates the end time to which the point coupon can be issued. The shown example indicates that the point coupon can be issued until "23:59:59".

*Issue day* 3138 indicates a day of week on which the point coupon can be issued, where "a" - "g" correspond to Monday to Sunday. In the example shown herein, *issue day* indicates "abcdefg", thus showing that the point coupon can be issued over the entire week from Monday to Sunday.

*Absolute expiration date* 3139 indicates the last day on which the point coupon can be used. The shown example indicates that the point coupon can be used until "June 30, 1999". "Use of a point coupon" means that the point coupon is exchanged with a gift, or a number of points is converted to a corresponding amount of money for use in ordering a product as a kind of a money coupon.

### 〈Step S9〉

The shop client 3 generates a point coupon cost share definition table 323 using the point coupon editor 307.

Referring now to Fig. 9, description will be made on the structure of the point coupon cost share definition table 323.

The point coupon cost share definition table 323 is used when a point coupon defined by a shop (X) is used at another shop (Y) to define the amount of money paid by (X) to (Y) as a rate per point.

The point coupon cost share definition table 323 is defined by the shop (X) and used when the point coupon defined by the shop (X) is issued at the other shop (Y) to define the amount of money paid by (Y) to (X), and when the point coupon is used at another shop (Z) to define the amount of money paid by (X) to (Z), as a rate per point. "Use of a point coupon" means that a fixed amount of the point coupon is exchanged with a gift or a discount coupon, or that the amount of money corresponding to the point coupon is discounted from a total amount of money upon ordering a product. When the shopping mall administrator circulates a point coupon over the entire shopping mall, the shopping mall administrator corresponds to the shop (X). 〈Step 9〉 is not required if a defined point coupon is not issued or used at other shops.

For example, as shown in Fig. 8, the point coupon "P001" issued by a shop (A) (*store ID* ="shopA") can be used only in the issuing shop (shop-A).

On the other hand, the shopping mall administrator itself responsible for managing the electronic shopping mall server 1, although not selling any product, can issue a discount coupon or a point coupon. Therefore, in regard of a point coupon available over all shops of the electronic shopping mall issued by the electronic shopping mall administrator using the electronic shopping mall client 3', when the point coupon is issued or used at another shop (Y), the point coupon cost share definition table 323 shown in Fig. 9 indicates the amount of money paid by the issuing shop (Y) to the administrator of the electronic shopping mall in the amount of money per point, or the amount of money paid by the administrator of the electronic shopping mall to the shop (Y) at which the coupon was used in the amount of money per point. Also, the point coupon cost share definition table 323 can be set when a certain shop issues a point coupon which is effective in a plurality of shops.

Referring further to Fig. 9, *defining store ID* 3231 indicates the store ID of a shop which has defined an associated point coupon. In the example shown herein, *defining store ID* 3231 is "Mall", where a character string "Mall" is a reserved word in the electronic shopping mall server 1, and the shopping mall administrator responsible for managing the electronic shopping mall server 1 can only use "Mall" as the store ID. Therefore, the shown example defines a point coupon issued by the electronic shopping mall administrator itself.

*Point coupon ID* 3232 is an ID for specifying a point coupon. The shown example specifies a point coupon labelled "POINT1".

*Store ID* 3233 indicates the store ID of a shop at which the point coupon was issued or the point coupon was used.

*Issue cost share rate* 3234 defines the amount of money per point paid from a shop (Y) to another shop (X) at a later time, when the point coupon defined in (X) was issued at (Y). The shown example indicates that when a point coupon defined by *defining store ID* 3231="Mall" was issued in a shop (shop-A), the cost paid from "shopA" to "Mall" is 2 cents per point.

*Use cost repayment rate* 3235 defines the amount of money per point paid from a shop (X) to another shop (Z) at a later time when a point coupon defined in the shop (X) was used at (Z). The shown example indicates that a point coupon defined by *defining store ID* 3231="Mall" was issued in a shop (shop-A), the cost paid from "Mall" to "shopA" is 2 cents per point.

This relation also applies other than that between the shopping mall and a shop. For example, when a plurality of shops within shops belonging to the shopping mall are associated in a group such that a common point coupon is available in the group, one shop (C) defining the common point coupon acts as an operation responsible shop for this point coupon. This point coupon can be issued only by the shop (C). When this point coupon is issued at another shop in the group, the issuing shop will pay the amount of money based on the issue cost share rate to the shop (C). When this point coupon is used at another shop in the group, the shop (C) will pay a certain amount of money based on the cost repayment rate to the shop at which the point coupon was used.

### 〈Step S10〉

The shop client 3 generates a template file 329 for issuing a point coupon using the template editor 308. The template file 329 for issuing a point coupon describes which of point coupons defined in step S8 and step S9 is issued to which of end users in which conditions. The template file 329 for issuing a point coupon includes processing for determining a point coupon to be issued and coupon management unit call processing.

As the processing for determining a point coupon to be issued, a script stating, for example, "if Number of Visits to Shopping Mall=1, then ten points of a point coupon with *store ID* = Mall, *point coupon ID* = POINT1 are issued with *issue reason ID* = FirstVisit" is described on the top page of the electronic shopping mall. The issuing condition "if ..., then ..." may be "if today is 19980101 - 19980108" or the like. As another issuing pattern, for example, a script stating "if Number of Visits to This Store = 1, then ...." may be described on a top page of a shop, or a script stating "if *product ID* of Currently Displayed Product = ****, then ....", or a script stating "if a page of a product with *product ID* = *** is displayed three times, then ...." is described in a product information description page to change the kind and number of a point coupon to be issued in accordance with log information. The log information is stored in the personal information table 113. Alternatively, a script stating "if the amount of money for an order is 100.00 dollars or more", or "if *Product ID* = *** is ordered", or "..., then one point will be issued per 1.00 dollar of an ordered amount of money" may be described on an order processing page to change the kind and number of points of a point coupon to be issued in accordance with the amount of money for an order or an ordered product. Step S10 is not always required since the administrators of shops are allowed to manually issue point coupons through a special issue template other than the issue of point coupon responsive to the executions of these templates.

### 〈Step S11〉

The upload file generate unit 327 of the shop client 3 generates a server upload file 330 from the product information table 312; the point coupon definition table 313; the point coupon cost share definition table 323; and the template file 329 which have been generated in steps S8 - S10. The server upload file 330 is a collection of information in the respective tables and the template file generated in the form of a file, and may further be encrypted.

### 〈Step S12〉

The shop client 3 communicates with the WWW server 101 of the electronic shopping mall server 1 using the WWW browser 301 to display an upload page. Then, the shop client 3 transmits the server upload file 330 to the WWW server 101 using a POST method of HTTP.

Thus, the shop client 3 terminates the processing associated with the definition of a point coupon. The electronic shopping mall client 3' also performs such processing in a similar manner.

Referring now to Fig. 10, description will be made on the structure of the personal information table 311 for storing personal information which must be defined in the electronic shopping mall server 1.

The personal information can be defined and modified only by the shopping mall administrator. The shopping mall administrator generates the personal information table 311 using the personal information editor 303.

As shown in Fig. 10, *session ID* 3111 in the personal information table 311 is a field used by the mall server 1, and is not defined by the shopping mall administrator.

*User ID* 3112 specifies a user in the shopping mall.

*Password* 3113 is used by the user when he logs in the shopping mall server 1.

*Name* 3114 and *address* 3115 indicate the name and the address of the user, respectively.

As information which must be defined in the electronic shopping mall server 1 irrespective of whether a discount coupon or a point coupon is issued or not, personal information, product information and a template are included in such information. The personal information is set in the personal information table 311 shown in Fig. 10. The product information is set in the product information table 312 as previously described in 〈Step S1〉 in Fig. 3. The template is a script interpreted by the page generate unit 102 to execute the order management unit 103 - the download file generate unit 110 to eventually generate an HTML file. The template file 329 is generated using the template editor 308.

The generated personal information, product information and template are collected in the server upload file 330 and transferred to the shopping mall server 1 in a manner similar to 〈Step S6〉 and 〈Step S7〉 in Fig. 3.

Next, referring to Figs. 11 to 14, description will be made on the flow of processing performed by the electronic shopping mall server 1 after the server upload file associated with the discount coupon, the point coupon, the product information, the personal information, the template and so on have been transferred to the WWW server 101 and received by the electronic shopping mall server 1.

First, the flow of processing performed by the electronic shopping mall server 1 upon receiving the server upload file for use in the electronic shopping mall system will be described with reference to Fig. 11.

### 〈Step S13〉

The WWW server 1 receives a request for executing the page generate unit 102 from the shop client 3 or the electronic shopping mall client 3'.

### 〈Step S14〉

The page generate unit 102 receives a server upload file 129 from the shop client 3 or the electronic shopping mall client 3', and executes the table update unit 109. The table update unit 109 decodes the server upload file 129 for analysis, and updates each of tables including a personal information table 113; a product information table 114; a point coupon definition table 115; and a discount coupon definition table 116, or a template file 132 in accordance with the type of information included in the server upload file 129.

Referring now to Fig. 12, description will be made on the structure of the product information table 114.

The product information table 114, which defines products sold in and/or services provided by the electronic shopping mall server 1, comprises the following fields: *store ID* 1140, *category* 1141, *product name* 1142, *product ID* 1143, *selling price* 1144, *delivery fee* 1145, *tax rate* 1146, and *description* 1147. The structure is similar to that of the product information table 312 previously shown in Fig. 4, which is generated in the shop client 3.

*Store ID* 1140 is an identifier for specifying a shop within the electronic shopping mall server 1. In the example shown herein, when a shop labelled "shopA" has generated a product information table, "shopA" is entered in *store ID* 1140 of the shop.

*Category* 1141 indicates the category of a product which is set by a shop. For example, "clothing" or "book" may be set in category 1141 as shown.

*Product name* 1142 indicates the name of the product, and "shirt" or "Introduction to Economics", for example, may be set therein as shown.

*Product ID* 1143 is an identifier for specifying the product within a shop, and "shirt 1" or "book 2" may be set therein.

*Selling price* 1144 indicates the price of the product, while *delivery fee* 1145 indicates a delivery fee per product when the product(s) is delivered to a purchaser.

*Tax rate* 1146 indicates the rate of tax in percent which is charged when the product is purchased. Also, *description* 1147 provides the end user with detailed description on the product.

Referring next to Fig. 13, description will be made on the structure of the point coupon definition table 115. The structure is similar to that of the point coupon definition table 313 previously shown in Fig. 8, which is generated in the shop client 3.

*Store ID* 1151 specifies a shop. In this example, "shopA" and "Mall" are set in *store ID* 1151.

*Point coupon ID* 1152 is an identifier for specifying a point coupon within the shop. For example, in the example shown herein, "shopA" issues a point coupon labelled "P001", and "Mall" issues a point coupon labelled "POINT1". A combination of *store ID* 1151 and *point coupon* ID 1152 is unique within point coupons registered in the electronic shopping mall server 1.

*Point coupon name* 1153 indicates the name of the point coupon. For example, "Big Point" or "Mall Point" may be set in this field.

*Issue start date* 1154 indicates the first day at which the point coupon can be issued. The shown example indicates that the point coupon can be issued from "January 1, 1998".

*Issue end date* 1155 indicates the last day at which the point coupon can be issued. The shown example indicates that the point coupons can be issued until "December 31, 1998" and "June 30, 1998", respectively.

*Issue start time* 1156 indicates the starting time from which the point coupon can be issued. The shown example indicates that the point coupon can be issued from "0:00:00" (indicated in hours, minutes and seconds).

*Issue end time* 1157 indicates the end time to which the point coupon can be issued. The shown example indicates that the point coupons can be issued until "23:59:59".

*Issue day* 1158 indicates a day of week on which the point coupon can be issued, where "a" - "g" correspond to Monday to Sunday. In the example shown herein, *issue day* indicates "abcdefg", thus showing that the point coupons can be issued over entire week from Monday to Sunday.

*Absolute expiration date* 1159 indicates the last day on which the point coupon can be used. The shown example indicates that the point coupons can be used until "June 30, 1999" and "December 31, 1999", respectively.

Referring next to Fig. 14, description will be made on the structure of the discount coupon definition table 116. The structure is similar to that of the discount coupon definition table 314 previously shown in Fig. 5, which is generated in the shop client 3.

*Store ID* 11601 specifies a shop. In this example, "shopA" and "Mall" have been set in *store ID* 11601.

*Discount coupon ID* 11602 is an identifier for specifying a discount coupon within the shop. For example, in the example shown, "shopA" issues a discount coupon labelled "W001", and "Mall" issues a discount coupon labelled "C001". A combination of store *ID* 11601 and *discount coupon ID* 11602 is unique within discount coupons registered in the electronic shopping mall server 1.

*Discount coupon name* 11603 indicates the name of the discount coupon. For example, "10.00 Dollars Discount Ticket for Clothing" and "5.00 Dollars Discount ticket for All Products" may be set in this field.

*Discounted product condition* 11604 indicates conditions which must be satisfied by a product to which the discount coupon is effective. When *discounted product condition* 11604 indicates "*store ID* = shop-A and *category* = clothing", this indicates that a discount coupon is effective only to products which has "shopA" in *store ID* 3120 and "clothing" in *category 3121*, and no discount condition is added (NULL).

*Discount amount* 11605 indicates a maximum value of discount amount when the discount coupon is applied to a product. When the selling price of a product is lower than the value in *discount amount*, an actual discount amount is equal to the selling price of the product.

*Issue start date* 11606 indicates the first day at which the discount coupon can be issued. The shown example indicates that the discount coupon can be issued from "January 1, 1998".

*Issue end date* 11607 indicates the last day at which the discount coupon can be issued. The shown example indicates that the discount coupons can be issued until "December 31, 1998" and "December 31, 2001", respectively.

*Issue start time* 11608 indicates the starting time from which the discount coupon can be issued. The shown example indicates that the discount coupons can be issued from "7:00:00" or "0:00:00" (indicated in hours, minutes and seconds), respectively.

*Issue end time* 11609 indicates the end time to which the discount coupon can be issued. The shown example indicates that the discount coupons can be issued until "22:59:59" and "23:59:59", respectively.

*Issue days* 11610 indicates a day of week on which the discount coupon can be issued, where "a" - "g" correspond to Monday to Sunday. In the example shown herein, *issue day* indicates "abcdefg", thus showing that the discount coupons can be issued over entire week from Monday to Sunday.

*Absolute expiration date* 11611 indicates the last day on which the discount coupon can be used. The shown example indicates that the discount coupons can be used until "June 30, 1999" and "June 30, 2001", respectively.

*Relative expiration date* 11612 indicates a term in which the discount coupon can be used after the issue. The shown example indicates that the discount coupons can be used for "30 days" and for "3650 days", respectively. Upon issuing the discount coupon, *absolute expiration date* 11611 is compared with the sum of the issue date and *relative expiration date* 11612, and the nearer one is selected as the actual expiration date.

Next, the flow of processing performed by the end-user client 2 when the end user "goes" shopping through the electronic shopping mall server 1 using the end-user client 2 will be described with reference to Figs. 15 and 17.

### 〈Step S20〉

The end-user client 2 requests the electronic shopping mall server 1 for a mall login page. For example, URL (Universal Resource Locator) requested by the end-user client 2 may be "http://www.samplemall.com/cgi-bin/pgen?SHOPID= mall&TEMPLATE=login.html". In response to this request, the electronic shopping mall server 1 starts a CGI program named "pgen" of the WWW server, which has a host name "www.samplemall.com", and passes a variable "SHOPID=mall&TEMPLATE=login.html".

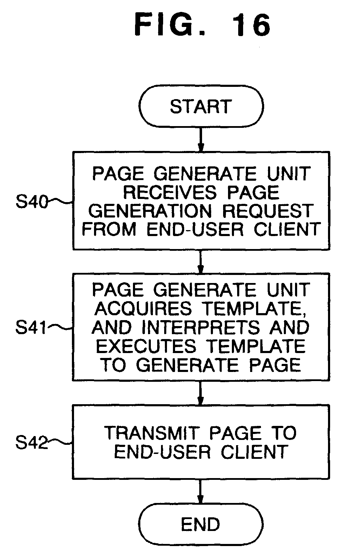

Next, an outline on the flow of processing in the electronic shopping mall server 1 responding to the request will be described with reference to Fig. 16. Details of the processing performed by the electronic mall server 1 will be described later with reference to Figs. 18 to 37.

### 〈Step S40〉

The page generate unit 102 receives a request for generating a page from the end-user client 2. For example, a CGI program named "pgen" of the WWW server 101 passes a variable "SHOPID=mall&TEMPLATE=login.html" to the page generate unit 102.

### 〈Step S41〉

The page generate unit 102 captures, interprets and executes a template to generate a page. For example, the page generate unit 102 extracts "mall" as a variable "SHOPID", and "login.html" as a variable "TEMPLATE" from the variable passed thereto. Next, assuming that an absolute path to a directory in which the contents of shops and mall are stored is "〈path〉", the page generate unit 102 reads "〈path〉¥(SHOPID) ¥template¥(TEMPLATE)". Specifically, in this case, the page generate unit 102 reads "〈path〉¥mall¥template¥login.html". The page generate unit 102 interprets the read template file, and generates an HTML file in accordance with the description using the order management unit 103 - the download file generate unit 110. Which of the order management unit 103 - the download file generate unit 110 is used will be described later depending on particular cases. In the example mentioned above, since "login.html" is a static HTML file for accepting a login to the shopping mall, the page generate unit 102 does not use any of the order management unit 103 - the download file generate unit 110.

### 〈Step S42〉

The page generate unit 102 returns the generated HTML file to the WWW server 101 which in turn transmits the HTML file to the end-user client 2.

Now, turning back to Fig. 15, the flow of processing performed by the end-user client 2 will be described.

### 〈Step S21〉

The end-user client 2 receives a mall login page from the electronic shopping mall server 1.

### 〈Step S22〉

The end-user client 2 inputs a previously determined user ID "honda" and a password "abc" using a FORM function of the mall login page to transmit them to the WWW server 1. URL at this time is "http://www.samplemall.com/cgi-bin/pgen?SHOPID= mall&TEMPLATE=login_act.html&userID=honda&passwd=abc".

Here, the flow proceeds to 〈Step S23〉 when the login processing is successful in the electronic shopping mall server 1, and returns to 〈Step S21〉 when the login processing fails.

### 〈Step S23〉

The end-user client 2 receives a shopping mall top page from the electronic shopping mall server 1. The shopping mall top page displays a link to shops belonging to the shopping mall, and a link to a page which displays information on discount coupons and point coupons possessed by the end user.

The flow proceeds to 〈Step S24〉 for displaying information on possessed coupons, and to 〈Step S26〉 for selecting a shop.

### 〈Step S24〉

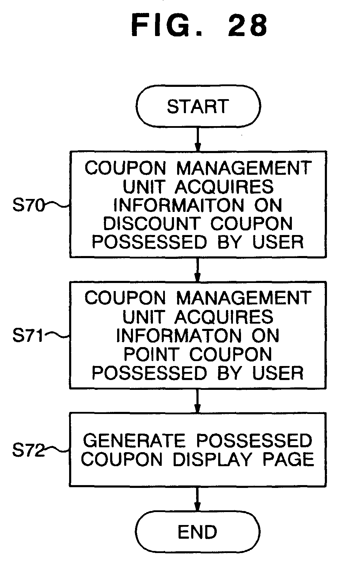

The end-user client 2 requests the electronic shopping mall server 1 to display information on discount coupons and point coupons possessed by the end user. URL associated with the request is "http://www.samplemall.com/cgi-bin/pgen?SHOPID= mall&TEMPLATE=show_coupon.html". Details of this processing will be described later with reference to Fig. 28.

### 〈Step S25〉

The end-user client 2 receives the page which displays the information on the possessed coupons from the electronic shopping mall server 1. The end user may return to the shopping mall top page by pressing a "BACK" button on the WWW browser.

### 〈Step S26〉

The end user selects the shop with *store ID* set to "shopA", and requests the electronic shopping mall server 1 to display the top page of the selected shop. URL associated with this request is "http://www.samplemall.com/cgi-bin/pgen?SHOPID= shopA&TEMPLATE=top.html". Details of this processing will be described later with reference to Fig. 29.

Upon terminating 〈Step S26〉 in Fig. 15, the flow proceeds to 〈Step S27〉 in Fig. 17.

### 〈Step S27〉

The end-user client 2 receives the top page of the shop with *store ID* set to "shopA" from the electronic shopping mall server 1. The top page of the store displays a list of information on products sold thereon, and a button for putting each product in a basket. After the end user has selected a product and put the product in the basket, the flow proceeds to 〈Step S28〉.

### 〈Step S28〉

The end-user client 2 requests the electronic mall server 1 to throw the product into the basket. For example, the end-user client 2 requests the electronic shopping mall server 1 to throw one product with *product ID* = "shirt1" into the basket. URL associated with this request is "http://www.samplemall.com/cgi-bin/pgen?SHOPID=shopping&TEMPLATE=Add.html&target=shopA&PID=shirt1&n=1". Details of this processing will be described later with reference to Fig. 29.

### 〈Step S29〉

The end-user client 2 receives a basket page from the electronic shopping mall server 1. When a discount coupon has already been assigned to the product, and the assignment is to be changed, the flow proceeds to 〈Step S30〉. Otherwise, when the end user returns to the top page of the shop to see other products, the flow proceeds to 〈Step S27〉. When the end user wants to use the possessed point coupons for payment, the flow proceeds to 〈Step S31〉. When the end user fixes the contents of the basket and registers the delivery destination and so on, the flow proceeds to 〈Step S32〉.

When the assignment of the discount coupon is changed, the flow proceeds to 〈Step S30〉.

### 〈Step S30〉

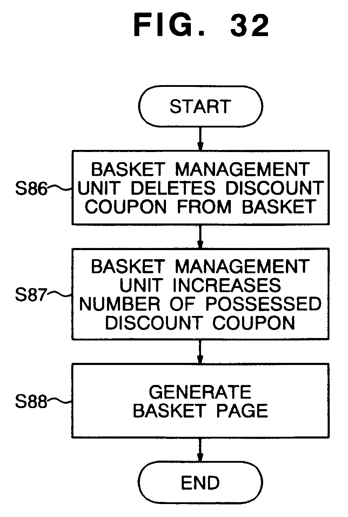

The end-user client 2 requests the electronic shopping mall server 1 to modify the assignment of the discount coupon to the product. For example, the end user selects a discount coupon labelled "W001" assigned to a product labelled "shirt1" and requests the electronic shopping mall server 1 to delete this assignment. URL associated with this request is "http://www.samplemall.com/cgi-bin/pgen?SHOPID= shopping&TEMPLATE=RemoveTicket.html&target=shopA&PID=shi rt1&ticket_shopID=shopA&ticketID=W001&expiration=1998043 0&n=1". In another case, when the product "shirt1" can still be assigned with the discount coupon, and the end user possesses the discount coupon "W001", the end user requests the electronic shopping mall server 1 to assign the discount coupon "W001" to the product "shirt1". URL associated with this request is "http://www.samplemall.com/cgi-bin/pgen?SHOPID= shopping&TEMPLATE=AddTicket.html&target=shopA&PID=shirt1 &ticket_shopID=shopA&ticketID=W001&expiration=19980430&n =1". Details of step S30 will be described later with reference to Fig. 32.

After the electronic shopping mall server 1 has modified the assignment of the discount coupon as requested, the flow proceeds to 〈Step S29〉.

When the end user wants to apply possessed point coupons for payment, the flow proceeds to 〈Step S31〉.

### 〈Step S31〉

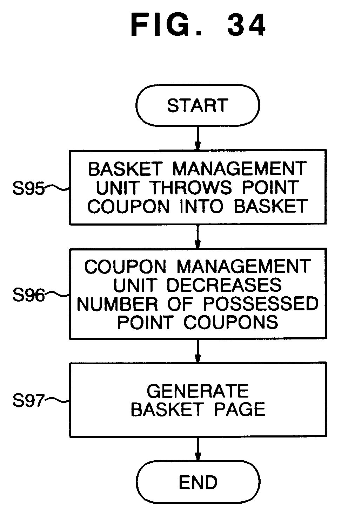

The end-user client 2 requests the electronic shopping mall server 1 to apply the point coupons. For example, the end-user client 2 requests the electronic shopping mall server 1 to register that "200 points" of the possessed point coupon "P001" available at "shopA" is applied to a payment to the basket for discounting the total amount of money for the order. URL associated with this request is "http://www.samplemall.com/cgi-bin/pgen?SHOPID=shopping&TEMPLATE=PayWithPoint.html&ticket_shopID=shopA&ticketID=P001&expiration=19990630&n=200" . If the registration is successful, the flow returns to 〈Step S29〉. Details of Step S31 will be described later with reference to Fig. 34.

When the contents of the basket are fixed and the delivery destination and so on are registered, the flow proceeds to 〈Step S32〉.

### 〈Step S32〉

The end-user client 2 transmits a request for fixing the contents of the basket to the electronic shopping mall server 1.

### 〈Step S33〉

The end-user client 2 receives a page for registering a payment method and a delivery address from the electronic shopping mall server 1. Details of step S33 will be described later with reference to Fig. 35.

### 〈Step S33〉

The end-user client 2 requests the electronic shopping mall server 1 to register a payment method and a delivery address.

### 〈Step S34〉

The end-user client 2 receives an order acceptance completion page from the electronic mall server 1.

Next, the processing performed by the electronic shopping mall server 1 when the end user "goes" shopping through the electronic shopping mall server 1 using the end-user client 2 will be described with reference to Figs. 18 to 37.

Referring first to Fig. 18, description will be made on the processing performed by the electronic shopping mall server 1 corresponding to the login request in 〈Step S22〉 from the end-user client 2, as previously described in Fig. 15. This is a detailed version of the description on 〈Step S41〉 in Fig. 16.

### 〈Step S50〉

The personal information management unit 105 in the electronic shopping mall server 1 checks validity of a user ID and a password. The following description is made on the processing performed by the respective units of the electronic shopping mall server 1 in accordance with a template "login_act.html". The page generate unit 102 receives "userID=honda" and "passwd=abc" as input parameters from the end-user client 2. First, the personal information management unit 105 checks whether or not "honda" and "abc" have been registered in *userID* and password of the personal information table 113, and returns the result to the page generate unit 102.

The contents of the personal information table 113 in the electronic shopping mall server 1 are the same as those of the personal information table 311 in the shop client 3 shown in Fig. 10. Thus, the personal information management unit 105 checks whether or not "honda" and "abc" have been registered in *userID* (corresponding to *userID* 3112 in Fig. 10) and *password* (corresponding to *password* 3113 in Fig. 10) of the personal information table 113, and returns the result to the page generate unit 102.

The page generate unit 102 proceeds to 〈Step S51〉 if "honda" and "abc" have been registered, and otherwise to 〈Step S56〉.

### 〈Step S51〉

The personal information management unit 105 generates a session ID which is stored in the personal information table 113. For example, the personal information management unit 105 generates a session ID randomly and exclusively as "Z36V9B" by way of example, and stores this session ID in *session ID* 3111 of a record whose user ID is "honda" in the personal information table 113.

### 〈Step S52〉

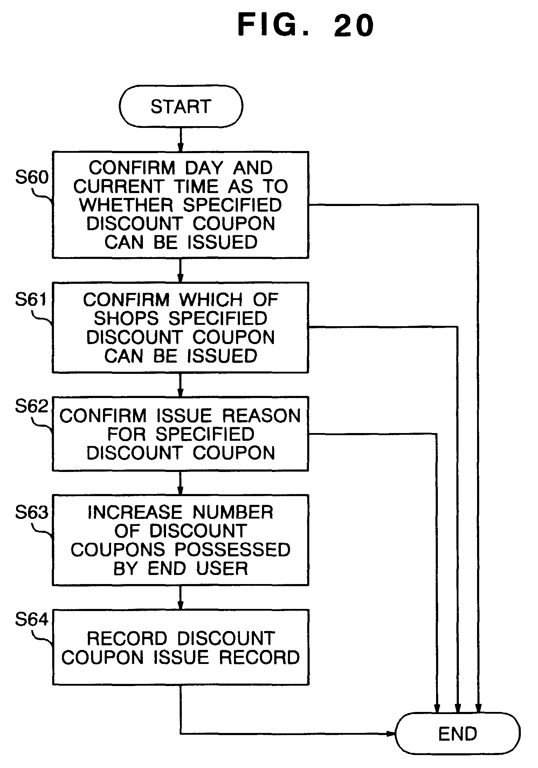

The coupon management unit 107 issues a discount coupon. Specifically, if a template "login_act.html" includes a script for issuing a discount coupon, the coupon management unit 107 issues the discount coupon. Details of this step will be described later with reference to Fig. 20.

### 〈Step S53〉

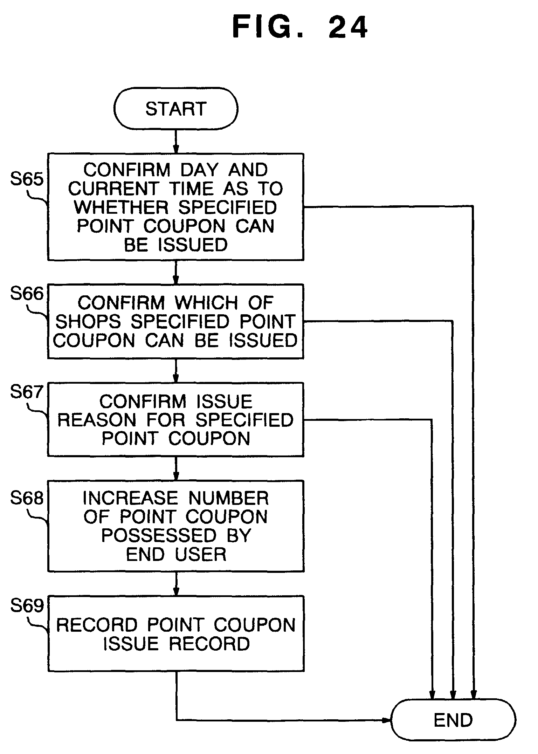

The coupon management unit 107 issues a point coupon. Specifically, if a template "login_act.html" includes a script for issuing a point coupon, the coupon management unit 107 issues the point coupon. Details of this step will be described later with reference to Fig. 24.

### 〈Step S54〉

The personal information management unit 105 increments a record indicative of the number of visits to the shopping mall in the record table 136.

Referring now to Fig. 19, description will be made on the structure of the record table 136.

*User ID* 1361 specifies a user associated with the record. For example, a user ID of "honda" has been registered in *userID* 1361, as shown.

*Session ID* 1362 specifies a session ID associated with the record. "N/A" shown herein indicates that no session ID is required in relation to *record period* 1363. "Z36V9B" on the third line has been randomly and exclusively generated by the personal information management unit 105 in the aforementioned 〈Step S51〉.

*Record period* 1363 classifies an intended period of the record to be accumulated. If the period is limited only to the present session, "session" is stored in *record period* 1363. Otherwise, if all of past records are intended, "accumulation" is stored in *record period* 1363.

*Record type* 1364 specifies the type of the record. "Visit" entered in *record type* 1364 indicates the number of visits; "reference", the number of references; "use of discount coupon", the number of times the discount coupon has been used; "number of orders", the number of orders; and "order amount", a total amount of money for the order, respectively.

*Store ID* 1365 specifies a shop associated with the record. "Mall" indicates the shopping mall, and "shopA" indicates a shop (A).

*Contents ID* 1366 specifies contents associated with the record, specifically, a product, a discount coupon or a point coupon.

*Value* 1367 specifies a value associated with the record, specifically, the number of times, a total amount of money, or the like.

### 〈Step S55〉

The page generate unit 102 generates the top page of the shopping mall. The WWW server 101 stores a session ID in a cookies file, which resides in the end-user client 2, when the WWW server 101 transmits an HTML file to the end-user client 2. The cookies file is read by the WWW server 101 each time the end-user client 2 accesses the WWW server 101 to confirm that the user is in the same session.

### 〈Step S56〉

The page generate unit 102 generates a shopping mall login page which requests the end user to reenter a user ID and a password.

Next, the flow of processing performed by the coupon management unit 108 when a request for issuing a discount coupon is made, i.e., details of 〈Step S52〉 in Fig. 18 will be described with reference to Fig. 20.

The following description will proceed, taking an example where it has been requested in accordance with a script written in a template that a shop with *store ID* set to "shopA" issues one discount coupon with *store ID* set to "shopA" and *discount coupon ID* set to "W001" to a user "honda", with *issue reason ID* being "MallTop".

### 〈Step S60〉

The coupon management unit 107 confirms the day and current time as to whether or not a specified discount coupon can be issued. Specifically, the coupon management unit 107 confirms in a record of the discount coupon definition table 116 which has *store ID* set to "shopA" and *discount coupon ID* set to "W001" that the date of the day is between *issue start date* 11606 and *issue end date* 11607; the time at which the issue of the discount coupon was requested is between *issue start time* 11608 and *issue end time* 11609; and the day of week is included in *issue days* 11610. If the conditions are not satisfied, the flow is aborted.

### 〈Step S61〉

The coupon management unit 107 confirms which of shops the specified discount coupon can be issued. Specifically, the coupon management unit 107 determines that the specified discount coupon can be issued in all shops when *store ID* 11601 is set to "Mall" and otherwise determines that the specified discount coupon can be issued only at the shop which has defined the discount coupon. In this example, since the specified discount coupon has been defined by "shopA" itself, the discount coupon can be issued. If the condition is not satisfied, the flow is aborted.

### 〈Step S62〉

The coupon management unit 107 confirms the reason for which the specified discount coupon has been issued. Specifically, the coupon management unit 107 confirms in the discount coupon issue reason table 120 whether or not the same discount coupon has been issued to the same user with reference to "MallTop" in *issue reason ID* of the discount coupon.

Referring now to Fig. 21, description will be made on the structure of the discount coupon issue reason table 120.

The discount coupon issue reason table 120 comprises *user ID* 1201; *defining store* 1202; *issuing store ID* 1203; *discount coupon ID* 1204; and *issue reason* 1205.

In the example shown herein, the first record indicates for a user "honda" (*user ID* 1201), that a discount coupon "W001" (*discount coupon ID* 1204) defined by a shop "shopA" (*defining store* 1202) has been issued by the shop "shopA" (*issuing store ID* 1203) with an issue reason ID "page1view" (*issue reason ID* 1205).

Here, for entering in *issue reason ID* 1205, an arbitrary character string may be used, and is set as an input parameter when the discount coupon is issued.

When the discount coupon is issued, the coupon management unit 107 searches the discount coupon issue reason table 120, and does not issue the discount coupon if the same record is found. In this way, when a template includes a script for issuing the discount coupon, the discount coupon can be prevented from being issued a plurality of times by the end user pressing a "Reload" button on the WWW browser. Alternatively, if the multiple issues of the discount coupon are avoided by means of another mechanism, the coupon management unit 107 does not need to check this *issue reason ID*, in which case "*" (asterisk) may be set to *issue reason ID* in requesting the issue of the discount coupon, with the result that 〈Step S62〉 is ignored.

### 〈Step S63〉

The coupon management unit 107 increases the number of discount coupons possessed by the end user. Specifically, the coupon management unit 107 references the customer discount coupon table 118, and increases *possessed number* 1185 by the number of newly issued discount coupons when the end user has already possessed the same discount coupons, and otherwise generates a new record. *Absolute expiration date* 11611 is compared with the sum of the date of the day and *relative expiration date* 11612, and the one nearer to the day is set as a expiration date for the discount coupons.

Referring now to Fig. 22, description will be made on the structure of the customer discount coupon table 118.

The customer discount coupon table 118 comprises *user ID* 1181; *defining store ID* 1182; *discount coupon ID* 1183; *expiration date* 1184; *possessed number* 1185; and *preliminarily possessed number* 1186.

In the example shown herein, the first record indicates that a user "honda" (*user ID* 1181) possesses "1" (*possessed number* 1185) of a discount coupon "W001" (*discount coupon ID* 1183), defined by "shopA" (*defining store ID* 1182), which has a expiration date "April 30, 1998" (*expiration date* 1184). *Preliminarily possessed number* 1186 indicates the number of discount coupons which is the difference calculated by subtracting the number of discount coupons now put in a basket from the number of discount coupons set in *possessed number* 1185. When a new record is generated, the same value is entered in *possessed number* 1185 and *preliminarily possessed number* 1186.

### 〈Step S64〉

The coupon management unit 107 stores an issue record in the discount coupon issue record table 122.

Referring now to Fig. 23, description will be made on the structure of the discount coupon issue record table 122.

The discount coupon issue record table 122 comprises *user ID* 1221; *defining store ID* 1222; *issuing store ID* 1223; *discount coupon ID* 1224: *issue reason* 1225; *issued date and time* 1226; *expiration date* 1227; and *issued number* 1228.

In the example shown herein, the first record indicates that "1" (*issued number* 1228) of a discount coupon "W001" (*discount coupon ID* 1224) defined by a shop "shopA" (*defining store ID* 1222) has been issued to a user "honda" (*user ID* 1221) by "shopA" (*issuing store ID* 1223) with an issue reason ID "page1view" (*issue reason ID* 1225) at "12 o'clock 15 minutes on March 30, 1998" (*issued date and time* 1226) with a expiration date being set on "April 30, 1998" (*expiration date* 1227).

Next, the flow of processing performed by the coupon management unit 108 when a request has been made to issue a point coupon, i.e., details of 〈Step S53〉 in Fig. 18 will be described with reference to Fig. 24.

The following description will proceed, taking an example where it has been requested in accordance with a script written in a template, that a shop with *store ID* set to "shopA" issues "20 point coupons" with *store ID* set to "shopA" and *point coupon ID* set to "P001" to a user "honda", with *issue reason ID* being "a".

### 〈Step S65〉

The coupon management unit 107 confirms the day and current time as to whether or not a specified point coupon can be issued. Specifically, the coupon management unit 107 confirms in a record of the point coupon definition table 115 which has *store ID* set to "shopA" and *point coupon ID* set to "P001" that the date of the day is between *issue start date* 1154 and *issue end date* 1155; the time at which the issue of the point coupon was requested is between *issue start time* 1156 and *issue end time* 1157; and the day of week is included in *issue days* 1158. If the conditions are not satisfied, the flow is aborted.

### 〈Step S66〉

The coupon management unit 107 confirms which of shops the specified point coupon can be issued. Specifically, the coupon management unit 107 determines that the specified point coupon can be issued in all shops when *store ID* 11501 is set to "Mall" and otherwise determines that the specified point coupon can be issued only in the shop which has defined the point coupon. In this example, since the specified point coupon has been defined by "shopA" itself, the point coupon can be issued. If the condition is not satisfied, the flow is aborted.

### 〈Step S67〉

The coupon management unit 107 confirms the reason for which the specified point coupon has been issued. Specifically, the coupon management unit 107 confirms in the point coupon issue reason table 119 whether or not the same point coupon has been issued to the same user with reference to "a" in *issue reason ID* of the point coupon.

Referring now to Fig. 25, description will be made on the structure of the point coupon issue reason table 119.

The point coupon issue reason table 119 comprises *user ID* 1191; *defining store* 1192; *issuing store ID* 1193; *point coupon ID* 1194; and *issue reason* 1195.

In the example shown herein, the first record indicates that a point coupon "P001" (*point coupon ID* 1194) defined by a shop "shopA" (*defining store* 1192) has been issued to a user "honda" (*user ID* 1191) by the shop "shopA" (*issuing store ID* 1193) with an issue reason ID "a" (*issue reason ID* 1195).

Here, for entering in *issue reason ID* 1195, an arbitrary character string may be used, and is set as an input parameter when the point coupon is issued.

When the point coupon is issued, the coupon management unit 107 searches the point coupon issue reason table 119, and does not issue the point coupon if the same record is found. In this way, when a template includes a script for issuing the point coupon, the point coupon can be prevented from being issued a plurality of times by the end user pressing a "Reload" button on the WWW browser. Alternatively, if the multiple issues of the point coupon are avoided by means of another mechanism, the coupon management unit 107 does not need to check this *issue reason ID*, in which case "*" (asterisk) may be set to *issue reason ID* in requesting the issue of the point coupon, with the result that 〈Step S67〉 is ignored.

### 〈Step S68〉

The coupon management unit 107 increases the number of point coupons possessed by the end user. Specifically, the coupon management unit 107 references the customer point coupon table 117, and increases *possessed number* 1175 by the number of newly issued point coupons when the end user has already possessed the same point coupons, and otherwise generates a new record. *Absolute expiration date* 11511 is compared with the sum of the date of the day and *relative expiration date* 11512, and the one nearer to the day is set as a expiration date for the point coupons.

Referring now to Fig. 26, description will be made on the structure of the customer point coupon table 117.

The customer point coupon table 117 comprises *user ID* 1171; *defining store ID* 1172; *point coupon ID* 1173; *expiration date* 1174; and *possessed number* 1175.

In the example shown herein, the first record indicates that a user "honda" (*user ID* 1171) possesses "240 points" (*possessed number* 1175) of a point coupon "P001" (*point coupon ID* 1173), defined by "shopA" (*defining store ID* 1172), which has a expiration date "April 30, 1998" (*expiration date* 1174) .

### 〈Step S69〉

The coupon management unit 107 stores an issue record in the point coupon issue record table 121.

Referring now to Fig. 27, description will be made on the structure of the point coupon issue record table 121.

The point coupon issue record table 121 comprises *user ID* 1211; *defining store ID* 1212; *issuing* *store ID* 1213; *point coupon ID* 1214: *issue reason ID* 1215; *issued date and time* 1216; *expiration date* 1217; and *issued number* 1218.

In the example shown herein, the first record indicates that "20 points" (*issued number* 1218) of the point coupon "P001" (*point coupon ID* 1214) defined by a shop "shopA" (*defining store ID* 1212) have been issued to a user "honda" (*user ID* 1211) by "shopA" (*issuing store ID* 1213) with an issue reason ID "a" (*issue reason ID* 1215) and a expiration date set on "June 30, 1990 (expiration date 1270) at "21 o'clock 35 minutes on January 12, 1998" (*issued date and time* 1216).

Next, the flow of processing performed by the electronic shopping mall server 1 when the electronic shopping mall server 1 has been requested to display information on possessed coupons, i.e., details of 〈Step S24〉 in Fig. 15 will be described with reference to Fig. 28.

In the following, description will be made on processing performed by respective units in accordance with the description of a template "show_coupon.html".

### 〈Step S70〉

The electronic shopping mall server 1 acquires a session ID taken from a cookies file and a user ID from the personal information table 113. Since this step is executed on the electronic shopping mall server 1 each time, description thereon will be omitted below.

The coupon management unit 107 in turn acquires information on a discount coupon possessed by the user. Specifically, the coupon management unit 107 searches the customer discount coupon table 118 based on the user ID of the user, and acquires information on a discount coupon possessed by the user.

### 〈Step S71〉

The coupon management unit 107 acquires information on a point coupon possessed by the user. Specifically, the coupon management unit 107 searches the customer point coupon table 117 based on the user ID of the user, and acquires information on a point coupon possessed by the user.

### 〈Step S72〉

The page generate unit 102 generates an HTML file for displaying the information on the possessed coupons using the acquired information.

Next, the flow of processing performed by the electronic shopping mall server 1 when the electronic shopping mall server 1 has been requested for a top page of a shop, i.e., details of 〈Step S26〉 in Fig. 15 will be described with reference to Fig. 29.

The following description will made on the processing performed by the electronic shopping mall server 1, taking an example where the electronic shopping mall server 1 has been requested for a shop top page of "shopA".

### 〈Step S75〉

If a template "top.html" includes a script written for issuing a discount coupon, the coupon management unit 107 requests to issue the discount coupon. Detailed processing performed when the discount coupon is issued is similar to the processing illustrated in Fig. 20.

### 〈Step S76〉

If the template "top.html" includes a script written for issuing a point coupon, the coupon management unit 107 issues the point coupon. Detailed processing performed when the point coupon is issued is similar to the processing illustrated in Fig. 24.

### 〈Step S77〉

The personal information management unit 105 increments the record of the number of visits to the shop "shopA" in the record table 136.

### 〈Step S78〉

The product information management unit 106 searches the product information table 114 to acquire information on products available at "shopA".

### 〈Step S79〉

The page generate unit 102 generates a product list page in HTML, which has descriptions on products and buttons for putting selected products in a basket arranged thereon, using the acquired information on products.

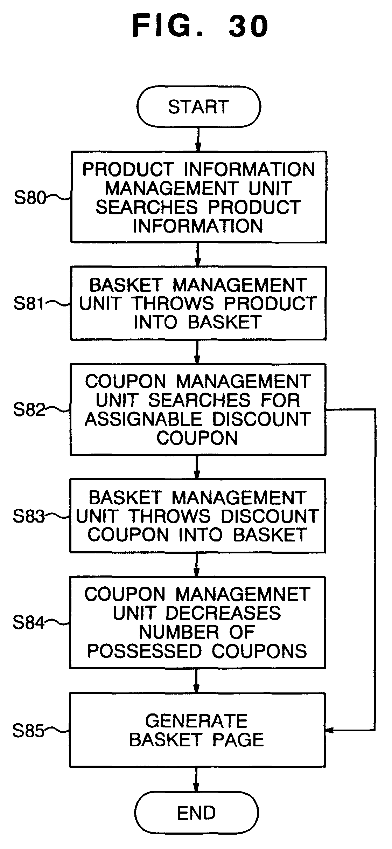

Next, the flow of processing performed by the electronic shopping mall server 1 when the electronic shopping mall server 1 has been requested to throw a product into a basket, i.e., details of 〈Step S28〉 in Fig. 17 will be described with reference to Fig. 30.

The following description will be made on the processing performed by the electronic shopping mall server 1, taking an example where the electronic shopping mall server 1 has been requested to throw a product "shirt1" of "shopA" into a basket.

### 〈Step S80〉

The product information management unit 106 acquires product information from the product information table 114. For example, the product information management unit 106 acquires product information on the product "shirt1" of "shopA", which has been requested to be thrown into a basket, from the product information table 114.

### 〈Step S81〉

The basket management unit 104 throws the acquired product information into the basket. For example, the basket management unit 104 adds the acquired product information to a basket table 112. If the same product has existed in the basket table 112, *quantity* 11208 is increased. Otherwise, a new record is generated.

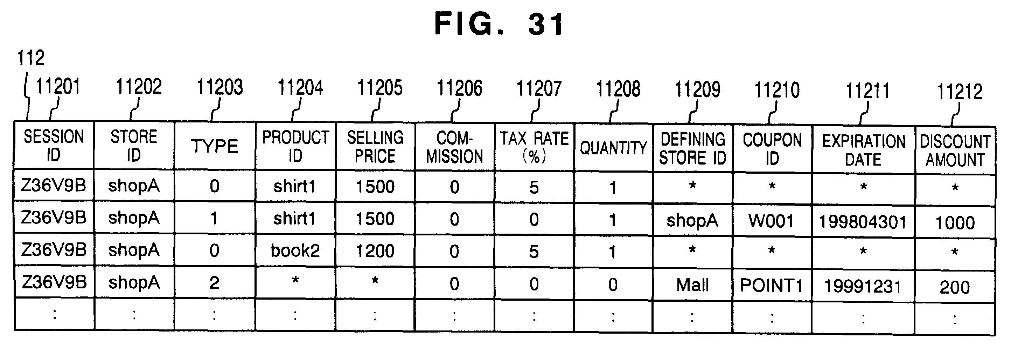

Referring now to Fig. 31, description will be made on the structure of the basket table 112.

The basket table 112 comprises *session ID* 11201; *store ID* 11202; *category* 11203; *product ID* 11204; *selling price* 11205; *commission* 11206; *tax rate* 11207; *quantity* 11208; *defining store ID* 11209; *coupon ID* 11210; *expiration date* 11211; and *discount amount* 11212.

In the example shown herein, the first record indicates to a user with *session ID* 11201 set to "Z36V9B" that the basket contains one product "shirt1" (*product ID* 11204) with a shop being "shopA" (*store ID* 11202), a selling price being "15.00 dollars" (*selling price* 11205) and a tax rate being "5 %" (*tax rate* 11207).

Category 11203 set at "0" indicates a product. *Defining store ID* 11209, *coupon ID* 11210, expiration *date* 11211 and *discount amount* 11212 set at "*" (asterisk) indicate that these fields do not relate to the product.

In the second record, *category* 11203 set at "1" indicates a discount coupon. *store ID* 11202, *product ID* 11204, *selling price* 11205 indicate an assigned product, *defining store ID* 11209, *coupon ID* 11210, *expiration date* 11211, *discount amount* 11212 and *quantity* 11208 indicate information on a discount coupon or a point coupon. An assigned number of discount coupons is limited to the number of products at maximum. The third record indicates that another product is present in the basket. Also, in the fourth record, *category* 11203 set at "2" indicates a point coupon.

### 〈step S82〉

The coupon management unit 107 searches for assignable discount coupons. Specifically, the coupon management unit 107 searches the customer discount coupon table 117 to acquire information on discount coupons possessed by the user, which has *preliminarily possessed number* 1186 indicating "1" or more (this means that the discount coupons can be put in a basket). Next, the coupon management unit 107 acquires *discount product conditio*n 11604 and *discount amount* 11605 from the discount coupon definition table 116 with respect to these discount coupons, extracts only discount coupons which can be assigned to the product thrown into the basket at 〈Step S81〉, and selects one from the extracted discount coupons. The selection may be made randomly, or based on a difference in a expiration date, a discount amount, a range of discount product condition, or the like among the candidates. If the coupon management unit 107 does not find any assignable discount coupon, the flow proceeds to 〈Step S85〉.

### 〈Step S83〉

The basket management unit 104 puts the selected discount coupon in the basket. As described in the second record in Fig. 31, the discount coupon is assigned to the product.

### 〈Step S84〉

The coupon management unit 107 decreases the number of preliminarily possessed discount coupons. Specifically, the coupon management unit 107 decrements by one the value in *preliminarily possessed number* of the assigned discount coupon in the customer discount coupon table 18.

### 〈Step S85〉

The page generate unit 102 acquires basket information from the basket management unit 104, and generates a basket page in HTML.

Next, the flow of processing performed by the electronic shopping mall server 1, when the electronic shopping mall server 1 has been requested to delete a discount coupon from a basket, i.e., details of 〈step S30〉 in Fig. 17 will be described with reference to Fig. 32.

The following description will be made on the processing performed by the electronic shopping mall server 1, taking an example where the electronic shopping mall server 1 has been requested to delete a discount coupon "W001" assigned to a product "shirt1" of "shopA" from a basket.

### 〈Step S86〉

The basket management unit 104 deletes the discount coupon from the basket. For example, in response to a request for deleting "1" of the discount coupon "W001" whose *expiration date* is "April 30, 1998", defined by "shopA" and assigned to the product "shirt1" of "shopA", the basket management unit 104 decreases the amount of the requested discount coupons by "1". The record is deleted if the amount reaches zero as a result of the decrease.

### 〈Step S87〉

The coupon management unit 107 increases the number of preliminarily possessed discount coupons. For example, the coupon management unit 107 searches the customer discount coupon table 117 and increases by "1" the number of the preliminarily possessed discount coupons "W001" whose expiration date is "April 30, 1998", defined by "shopA" and possessed by a user "honda".

### 〈Step S88〉

The page generate unit 102 acquires basket information from the basket management unit 104, and generates a basket page in HTML.

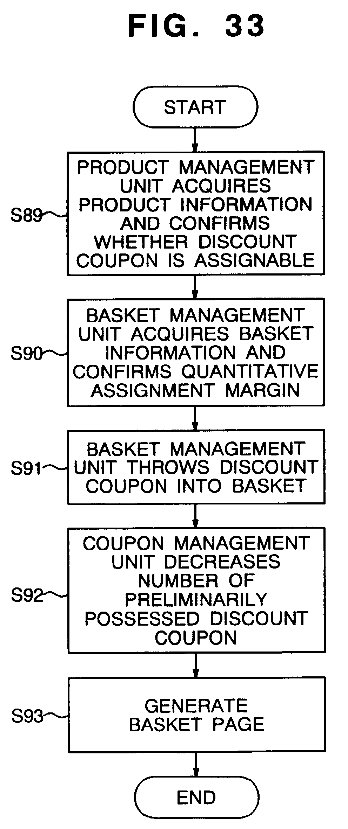

Next, the flow of processing performed by the electronic shopping mall server 1 when the electronic shopping mall server 1 has been requested to throw a discount coupon in a basket, i.e., details of 〈Step S30〉 in Fig. 17 will be described with reference to Fig. 33.

The following description will be made on the processing performed by the electronic shopping mall server 1, taking an example where the electronic shopping mall server 1 has been requested to assign "1" of a discount coupons "W001", defined by "shopA", whose expiration date is "April 30, 1998" to a product "shirt1" of "shopA".

### 〈Step S89〉

The product information management unit 106 acquires product information to confirm whether or not the discount coupons can be assignable. For example, the coupon management unit 107, in response to a request for assigning "1" of the discount coupons "W001" whose expiration date is "April 30, 1998", defined by "shopA" and assigned to the product "shirt1" of "shopA", acquires *discount product condition* 11604 and *discount amount* 11605 from the discount coupon definition table 116 to confirm that the discount coupons "W001" are assignable.

### 〈Step S90〉

The basket management unit 104 acquires basket information to confirm a quantitative assignment margin. Specifically, the basket management unit 104 acquires the amount of the products and a total amount of the discount coupons assigned to the product from the basket table 112 to confirm that the former is larger.

### 〈Step S91〉

The basket management unit 104 throws the discount coupon into a basket. Specifically, the basket management unit 104 updates the basket table 112 to increase the amount of the associated discount coupons by "1". If the discount coupon has not been assigned, a new record is generated therefor.

### 〈Step S92〉

The coupon management unit 107 decreases the of the preliminarily possessed number discount coupons. Specifically, the coupon management unit 107 searches the customer discount coupon table 117 for the discount coupon "W001" whose expiration date is set on "April 30, 1998", defined by "shopA" and possessed by the user "honda", and decreases by "1" the number of the preliminarily possessed discount coupons.

### 〈Step S93〉

The page generate unit 102 acquires basket information from the basket management unit 104, and generates a basket page in HTML.

Next, the flow of processing performed by the electronic shopping mall server 1 when the electronic shopping mall server 1 has been requested to pay with a point coupon, i.e., details of 〈Step S31〉 in Fig. 17 will be described with reference to Fig. 34.

The following description will be made on the processing performed by the electronic shopping mall server 1, taking an example where the electronic shopping mall server 1 has been requested to apply "200 points" of a point coupon "P001" defined by "shopA", whose expiration date is "June 30, 1996", to payment for a basket.

### 〈Step S95〉

The basket management unit 104 adds a point coupon to the basket table 112. For example, in the example shown in Fig. 31, *category* 11203 of the record indicated on the fourth line is set at "2", which indicates a point coupon. *Discount amount* 11212 is set at "2.00 dollars", assuming that one point corresponds to one cent. *Product ID* 11204 and *selling price* 11205 are both set to "*" (asterisk) because the point coupon has not been assigned to a product. *Store ID* 11202 is not set to "*" (asterisk) because later aggregation is performed with *store ID* 11202 used as a key.

### 〈Step S96〉

The coupon management unit 107 decreases *possessed number* 1175 of the point coupon. For example, in the example described above, the coupon management unit 107 decreases by "200" possessed number 1175 of the point coupons in the customer point coupon table 117.

### 〈Step S97〉

The page generate unit 102 acquires basket information from the basket management unit 104, and generates a basket page in HTML.

Next, the flow of processing performed by the electronic shopping mall server 1 when the electronic shopping mall server 1 has been requested to register a payment method and a delivery address, i.e., details of a request for determining an order acceptance in 〈Step S33〉 in Fig. 17 will be described with reference to Fig. 35.

### 〈Step S100〉

The basket management unit 104 acquires basket information. Specifically, the basket management unit 104 acquires basket information such as information on a product, coupons and so on from the basket table 112 with *session ID* used as a key.

### 〈Step S101〉

The order management unit 103 updates the order table 111. Specifically, the order management unit 103 stores the basket information acquired in 〈Step S100〉 in the order table 111.

### 〈Step S102〉

The coupon management unit 107 decreases the number of possessed discount coupons. Specifically, for the discount coupon stored in the order table 111 in 〈Step S101〉, the coupon management unit 107 equals *possessed number* 1185 of the discount coupons to *preliminarily possessed number* 1186 in the customer discount coupon table 118. If the possessed number reaches zero, the associated record is deleted.

### 〈Step S103〉

The coupon management unit 107 records a discount coupon use record. Specifically, for the discount coupon stored in the order table 111 in 〈Step S101〉, the coupon management unit 107 records the discount coupon and information on a product to which the discount coupon has been assigned in the discount coupon use record table 124 shown in Fig. 36.

Referring now to Fig. 36, description will be made on the structure of the discount coupon use record table 124.

The discount coupon use record table 124 comprises *user ID* 1241; *defining store ID* 1242; *discount coupon ID* 1243; *used date and time* 1244; *expiration date* 1245; *used number* 1246; *assigned product store* ID 1247; and *discount amount* 1248.

In the example shown herein, the first record indicates that a user with *user ID* 1241 set to "honda" used "1" (*used number* 1246) of discount coupons "W001" (*discount coupon ID* 1243) defined by "shopA" (*defining store ID* 1242) "at 12 o'clock 15 minutes on April 15, 1998" (*used date and time* 1244), and that "pants1" (*assigned product ID*) was discounted by "10.00 dollars" (*discount amount* 1249) at "shopA" (*assigned product store ID* 1247).

In 〈Step S103〉, the coupon management unit 107 records *user ID* 1241 taken from a session ID; *defining store ID* 1242 of the discount coupon; *discount coupon ID* 1243; u*sed date and time* 1244; *expiration date* 1245 of the discount coupon; *used number* 1246 of the discount coupon; *store ID* 1247 of the assigned product; *product ID* 1248; and *discount amount* 1249.

### 〈Step S104〉

The coupon management unit 107 decreases the number of possessed point coupons. Specifically, for the point coupon stored in the order table 111 in 〈Step S101〉, the coupon management unit 107 decreases *possessed number* 1175 of the point coupons in the customer point coupon table 117 by the number of the point coupons stored in the order table 111. If the possessed number reaches zero, the associated record is deleted.

### 〈Step S105〉

The coupon management unit 107 records a point coupon use record. Specifically, for the point coupon stored in the order table 111 in 〈Step S101〉, the coupon management unit 107 records point coupon information in the point coupon use record table 123.

Referring now to Fig. 37, description will be made on the structure of the point coupon use record table 123.

The point coupon use record table 123 comprises *user ID* 1231; *defining store ID* 1232; *point coupon ID* 1233; *used store ID* 1234; *used date and time* 1235; *expiration date* 1236; and *used number* 1237.

In the example shown herein, the first record indicates that a user with *user ID* 1231 set to "honda" used "100 points" (*used number* 1237) of a point coupon "P001" (*point coupon ID* 1233) defined by "shopA" (*defining store ID* 1232) "at 15 o'clock 0 minutes on February 1, 1998" (*used date and time* 1235) at "shopA" (*used store ID* 1234).

In 〈Step S105〉, the coupon management unit 107 records *user ID* 1231 taken from a session ID; *defining store ID* 1232 of the point coupon; *point coupon ID* 1233; *used store ID* 1234; *used date and time* 1235; *expiration date* 1236 of the point coupon; *used number* 1237 of the point coupon in the point coupon use record table 123.

### 〈Step S106〉

The order management unit 103 stores a payment method and a delivery address. Specifically, the order management unit 103 stores the payment method and the delivery address in the order table 111 associated with the information stored in the order table 111 in 〈Step S101〉. Here, in the electronic shopping mall server 1, any payment method may be used.

### 〈Step S107〉

The basket management unit 104 deletes basket table information. Specifically, the basket management unit 104 deletes information on associated products, coupons and so on from the basket table 112.

### 〈Step S108〉

The coupon management unit 107 issues a discount coupon. Specifically, if a template describes that a particular discount coupon is issued in accordance with the type of an ordered product or in accordance with a total amount of money for an order, the coupon management unit 107 issues the discount coupon. The processing involved in issuing the discount coupon is identical to that described in connection with Fig. 20.

### 〈Step S109〉

The coupon management unit 107 issues a point coupon. Specifically, if a template describes that a particular point coupon is issued in accordance with the type of an ordered product or in accordance with a total amount of money for an order, the coupon management unit 107 issues the point coupon. The processing involved in issuing the point coupon is identical to that described in connection with Fig. 24.

### 〈Step S110〉

The page generate unit 102 generates a page for confirming the acceptance of the order.

Next, processing involved in calculating a cost charge for a discount coupon will be described with reference to Figs. 38 to 40.

"Cost charge for a discount coupon" refers to a transfer of money between shops. Specifically, when a discount coupon was used at a shop which is different from the shop which had defined the discount coupon, some cost is repaid to the shop at which the discount coupon was used. In this event, the shopping mall is also regarded as a shop.

The cost charge for the discount coupon is calculated in the electronic shopping mall server 1 in a batch manner. Periodically, for example, once a month, the electronic shopping mall server 1 executes a discount coupon cost share aggregation program. A period of aggregation is set in the discount coupon cost share aggregation program as a parameter upon starting the program. For example, if the program is executed once a month, the period of aggregation is set to be a past one month from the day on which the program is executed. Alternatively, the discount coupon cost share aggregation program may be invoked at arbitrary timing from the shop client 3 with an arbitrary period of aggregation used as a parameter.

Referring now to Fig. 38, description will be made on the processing performed by the electronic shopping mall server 1 when the cost share for a discount coupon is aggregated.

### 〈Step S120〉

The coupon aggregation unit 108 acquires discount coupon use record information. Specifically, the coupon aggregate unit 108 acquires only records which have used *date and time* 1244 falling within a specified period of aggregation, from the discount coupon use record table 124.

### 〈Step S121〉

The coupon aggregation unit 108 acquires the discount coupon cost share definition table 126.

Referring now to Fig. 39, description will be made on the structure of the discount coupon cost share definition table 126.

The discount coupon cost share definition table 126 comprises *defining store ID* 1261; *discount coupon ID* 1262; *store ID* 1263; and *use cost repay rate* 1264.

In the example shown herein, the second record indicates that when a discount coupon "C001" (*discount coupon ID* 1262) defined by "Mall" (*defining store ID* 1261) is used in "shopA" (*store ID* 1263), "60 %" (*use cost repay rate* 1264) of discounted amount of money will be repaid from "Mall" to "shopA".

### 〈Step S122〉

The coupon aggregation unit 108 calculates a cost charge for the discount coupon. For example, in the first record in the discount coupon use record table 124 shown in Fig. 36, since *defining store ID* 1242 and *assigned product store ID* 1247 are both "shopA", no cost share occurs. In the second record, on the other hand, since *defining store ID* 1242 is "Mall" and *assigned product store ID* 1247 is "shopB", cost share does occur. A cost repay rate when a coupon "C001" is used at "shopB" is "60 %", referring to the discount coupon cost share definition table 126 shown in Fig. 39. Therefore, "Mall" will pay "shopA" "3.00 dollars" which is "60 %" of the discount amount "5.00 dollars".

In this way, for records in the discount coupon use record table 124 which have *used date and time* 1244 falling within the period of aggregation, and different *defining store ID* 1242 and *assigned product store ID* 1247, the coupon aggregation unit 108 acquires the cost repay rates for the discount coupons at the used stores from the discount coupon cost share definition table 126, and aggregates values calculated by multiplying discount amount 1249 by use *cost repay rate* 1264 separately for the defining stores and used stores to calculate the cost charges for the respective stores.

### 〈Step S123〉

The coupon aggregation unit 108 updates the discount coupon cost share table 128.

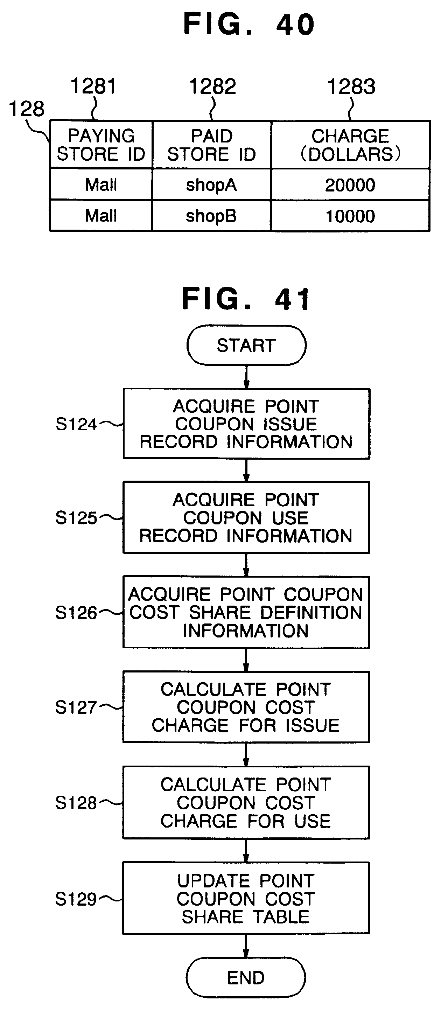

Referring now to Fig. 40, description will be made on the structure of the discount coupon cost share table 128.

The discount coupon cost share table 128 comprises *paying store ID* 1281; *paid store ID* 1282; and *charge* 1283.

In the example shown herein, the first record indicates that "Mall" (*paying store ID* 1281) must pay "200.00 dollars" (*charge* 1283) to "shopA" (*paid store ID* 1282), while the second record indicates that "Mall" (*paying store ID* 1281) must pay "100.00 dollars" (*charge* 1283) to "shopB" (*paid store ID* 1282).

In 〈Step S123〉, the coupon aggregation unit 108 records the defining store ID in *paying store ID* 1281; the used store ID in *paid store ID* 1282; and the aggregation result as *charge* 1283 in the discount coupon cost share table 128.

Next, processing involved in calculating a cost charge for a point coupon will be described with reference to Figs. 41 to 43.

"Cost charge for a point coupon" refers to a transfer of money between shops. Specifically, when a point coupon was issued at a shop which is different from the shop which had defined the point coupon, the issuing shop charges some cost, and when the point coupon was used at a shop different from the shop which had defined the point coupon, some cost is repaid to the shop at which the point coupon was used. In this event, the shopping mall is also regarded as a shop.

The cost charge for the point coupon is calculated in the electronic shopping mall server 1 in a batch manner. Periodically, for example, once a month, the electronic shopping mall server 1 executes a point coupon cost share aggregation program. A period of aggregation is set in the point coupon cost share aggregation program as a parameter upon starting the program. For example, if the program is executed once a month, the period of aggregation is set to be a past one month from the day on which the program is executed. Alternatively, the point coupon cost share aggregation program may be invoked at arbitrary timing from the shop client 3 with an arbitrary period of aggregation used as a parameter.

Referring now to Fig. 41, description will be made on the processing performed by the electronic shopping mall server 1 when the cost share for a point coupon is aggregated.

### 〈Step S124〉

The coupon aggregation unit 108 acquires point coupon issue record information. Specifically, the coupon aggregate unit 108 acquires only records which have *issued date and time* 1216 falling within a specified period of aggregation, from the point coupon issue record table 121.

### 〈Step S125〉

The coupon aggregation unit 108 acquires point coupon use record information. Specifically, the coupon aggregate unit 108 acquires only records which have *used date and time* 1235 falling within a specified period of aggregation, from the point coupon use record table 123.

### 〈Step S126〉

The coupon aggregation unit 108 acquires the point coupon cost share definition table 125.

Referring now to Fig. 42, description will be made on the structure of the point coupon cost share definition table 125.

The point coupon cost share definition table 125 comprises *defining store ID* 1251; *point coupon ID* 1252; *store ID* 1253; *issue cost repay rate* 1254; and *use cost repay rate* 1255.

In the example shown herein, the second record indicates that when a point coupon "POINT1" (*point coupon ID* 1252) defined by "Mall" (*defining store ID* 1251) is issued in "shopB" (*store ID* 1253), "shopB" will share "2 cents" (*issue cost share rate* 1254) per point, and pay this amount of money to "Mall", and when the point coupon "POINT1" is used at "shopB" (*store ID* 1253), "shopB" will be paid "1 cent" (*use cost repay rate* 1255) per point from "Mall".

### 〈Step S127〉

The coupon aggregation unit 108 calculates a cost charge for the point coupon. For example, in the first record in the point coupon issue record table 121 shown in Fig. 27, since *defining store ID* 1212 and *issuing store ID* 1213 are both "shopA", no cost share occurs. In the second record, on the other hand, since *defining store ID* 1212 is "Mall" and *issuing store ID* 1213 is "shopA", cost share does occur. A cost share rate when a point coupon "POINT1" is issued at "shopA" is "1 cent" per point, referring to the point coupon cost share definition table 125 shown in Fig. 42. Therefore, "shopA" will pay "Mall" "20 cents" for the number of issued points which is "20" points.

In this way, for records in the point coupon use record table 121 which have *used date and time* 1214 falling within the period of aggregation, and different *defining store ID* 1212 and *issuing store ID* 1213, the coupon aggregation unit 108 acquires the cost repay rates for the point coupons at the issued stores from the point coupon cost share definition table 125, and aggregates values calculated by multiplying *issued number* 1218 b*y issue cost share rate* 1254 separately for the defining stores and issuing stores to calculate the cost charges for the respective stores.

### 〈Step S128〉

The coupon aggregation unit 108 calculates a cost share related to the use. For example, in the first record in the point coupon use record table 123 shown in Fig. 37, since *defining store ID* 1232 and *used store ID* 1234 are both "shopA", no cost share occurs. In the second record, on the other hand, since *defining store ID* 1232 is "Mall" and *used store ID* 1234 is "shopB", cost share does occur. A cost repay rate when a point coupon "POINT1" is used at "shopB" is 1 cent per point, referring to the point coupon cost share definition table 125 shown in Fig. 42. Therefore, "Mall" will pay "shopB" "56 cents" for the number of used points which is "56" points.

In this way, for records in the point coupon use record table 123 which have *used date and time* 1235 falling within the period of aggregation, and different *defining store ID* 1232 and *used store ID* 1234, the coupon aggregation unit 108 acquires the cost repay rates for the point coupons at the used stores from the point coupon cost share definition table 125, and aggregates values calculated by multiplying *used number* 1237 by use *cost share rate* 1255 separately for the defining stores and used stores to calculate the cost charges for respective stores.

### 〈Step S129〉

The coupon aggregation unit 108 updates the point coupon cost share table 127.

Referring now to Fig. 43, description will be made on the structure of the point coupon cost share table 127.

The point coupon cost share table 127 comprises *paying store ID* 1271; *paid store ID* 1272; and *charge* 1273.

In the example shown herein, the first record indicates that "shopA" (*paying store ID* 1271) must pay "150.00 dollars" (*charge* 1273) to "Mall" (*paying store ID* 1272), while the second record indicates that "shopA" (*paying store ID* 1271) must pay "200.00 dollars" (*charge* 1273) to "shopB" (*paid store ID* 1272).

In 〈Step S129〉, the coupon aggregation unit 108 records the aggregation result in 〈Step S127〉 in the point coupon cost share table 127 of Fig. 43, i.e., the defining store ID in *paying store ID* 1271; the used store ID in *paid store ID* 1272; and the aggregation result as *charge* 1283. Next, the coupon aggregation unit 108 records the aggregation result in 〈Step S128〉 in the same table 127, i.e., the defining store ID in *paid store ID* 1272; the used store ID in *paying store ID* 1271; and the aggregation result as *charge* 1273. In this event, if the point coupon cost share table 127 have already had a record which has the same *paying store ID* 1271 and *paid store ID* 1272, the value of *charge* 1273 just calculated is added to the value previously stored therein. If no such record exists, a new record is generated to record the aggregation result.

Next, description will be made on processing for downloading the respective tables in the electronic mall server 1 to the shop client 3.

The shop client 3 enters the type and period of a table to be downloaded on a page for downloading, and requests the electronic shopping mall server 1 to download the table.

The electronic shopping mall server 1 has the download file generate unit 110 search the table which has been requested for download, acquires only data related to the requesting shop within the specified period, and collects the acquired data in the shop download file 130. The shop download file 130 may be encrypted before delivery.

The download file generate unit 110 acquires product order information, payment method and delivery address of the requesting shop from the order table 111, and acquires records whose *store ID* matches the requesting shop from the record table 335. The download file generate unit 110 also acquires records whose *paying store ID* or *paid store ID* matches the requesting shop from the discount coupon cost share table 128 and the point coupon cost share table 127. The download file generate unit 110 further acquires records whose *defining store ID* matches the requesting shop from the customer discount coupon table 118, the customer point coupon table 117, the discount coupon issue reason table 120, and the point coupon issue reason table 119, and acquires all records from the personal information table 113.

The WWW server 101 transmits the shop download file 130 to the shop client 3, and the shop download file 130 is stored as a download file 331 in the shop client 3. Next, the table update unit 328 decodes and analyzes the download file 331, and updates a group of tables 309 depending on the types of included information.

The shop client 3 references the downloaded discount coupon cost share table 326 and point coupon cost share table 325 to settle the cost share using a payment means such as a transfer through a bank account or the like.

## Claims

1. A computer system mutually connected through a network (4), comprising:
a first computer (1) used by a mall administrator and issuing a coupon;
a second computer (2) used by a user receiving said coupon; and
a third computer (3) used by another user managing a shop where said coupon is used at said second computer,
wherein a retail cost rebate is claimed between said mall administrator and said shop in accordance with an issue and usage of said coupon.

2. A computer system according to claim 1, wherein:
said first computer is a server having a coupon definition table (116);
said second computer is an end-user client; and
said third computer is a shop client which defines information for managing said shop.

3. A computer system according to claim 2, further comprising a fourth computer (3) used by another shop issuing a coupon, said fourth computer being another shop client.

4. A computer system according to claim 1, further comprising a fourth computer (3') for defining whether or not said mall administrator issues a coupon, and notifying said first computer of the definition.

5. A computer system according to claim 1, wherein:
said third computer defines whether or not said shop issues a coupon, and notifies said first computer of the definition.

6. A server (1) connected to a plurality of clients (2, 3, 3') through a network (4) comprising:
a coupon management unit (107) for defining a coupon effective to a plurality of shops, and for managing a coupon issued from one shop of said plurality of shops to a shop; and
a coupon aggregation unit (108) connected to said coupon management unit and responsive when said coupon is used by said user at a shop to calculate a retail cost rebate between said one shop and said other shop in accordance with a issue and use situation of said coupon.

7. A server according to claim 6, further comprising:
a coupon definition table (115, 116) for setting therein an ID of a shop which can issue a coupon, and temporal information on a time period during which said coupon can be issued prior to definition of said coupon by said coupon management unit.

8. A server according to claim 7, wherein:
said coupon includes at least one of a discount coupon and a point coupon.

9. A server according to claim 6, wherein:
said coupon includes at least one of a discount coupon and a point coupon.

10. A server according to claim 6, further comprising:
a rebate definition table (125 - 128) for setting a rate of rebate for calculating a retail cost rebate for said one shop and said other shop.

11. A server according to claim 10, further comprising a basket table (112) accessed from any of said plurality of clients for an order at a shop, said basket table holding information on an ordered product.

12. A server (1) connected to a plurality of clients (2, 3, 3') through a network (4), comprising:
a coupon definition table (115, 116) defined by one client (3') of a plurality of clients for holding coupon definition information received through said network; and
a coupon aggregation unit (108) responsive when a coupon issued on the basis of the contents of said coupon definition table is used by a user who uses another client (2) of said plurality of clients at a shop managed by use of a further client (3), to calculate a retail cost rebate between a shop which issued a coupon and a shop where said coupon is used in accordance with an issue and use situation of said coupon.

13. A server according to claim 12, wherein:
said other client (2) is an end-user client, and said further client (3) is a shop client.

14. A server according to claim 13, further comprising:
a rebate definition table (125 - 128) for setting a rate of rebate for calculating a retail cost rebate for each of said one shop and said other shop.

15. A server (1) connected to a plurality of clients (2, 3, 3') through a network (4), comprising:
a coupon management unit (107) for defining a coupon effective to a plurality of shops, and for managing a coupon issued from one shop which uses one client of said plurality of shops to a user who uses other client (2); and
a coupon aggregation unit (108) connected to said coupon management unit, and responsive when said coupon is used by said user at another shop managed by use of a further client (3) to calculate a retail cost rebate between one shop and said another shop in accordance with an issue and use situation of said coupon.

16. A server according to claim 15, further comprising:
a coupon definition table (115, 116) for setting therein an ID of a shop which can issue a coupon, and temporal information on a time period during which said coupon can be issued prior to definition of said coupon by said coupon management unit.

17. A coupon management method for managing a coupon in a computer system including a plurality of computers (1, 2, 3) mutually connected through a network (4), said method comprising the steps of:
issuing a coupon from a mall administrator at a first computer (1);
receiving said coupon at a user who uses a second computer (2); and
using said coupon by said user at a shop managed by a user who uses a third computer (3),
wherein a retail cost rebate is calculated between said mall administrator and said shop in accordance with an issue and use situation of said coupon.

18. A coupon management method according to claim 17, further comprising the step of:
defining from said third computer whether or not said shop issues a coupon, and notifying said first computer of the definition.

19. A storage medium mounted in a server (1) connected to a plurality of clients (2, 3, 3') through a network (4), comprising:
a code representative of a coupon management step of defining a coupon effective to a plurality of shops to manage a coupon issued from one shop which uses one client of said plurality of shops to a user who uses other client (2); and
a code representative of a coupon aggregation step of calculating, when said coupon is used by said user at another shop which uses a further client (3), a retail cost rebate between said one shop and said another shop in accordance with an issue and use situation of said coupon.

20. A storage medium according to claim 19, further comprising:
a code representative of a coupon definition step of setting therein an ID of a shop at which a coupon can be issued, and temporal information on a time period during which said coupon can be issued, prior to the definition of said coupon in said coupon management step.

21. A storage medium mounted in a server (1) connected to a plurality of clients (2, 3, 3') through a network (4), comprising:
a code representative of a coupon management step of defining a coupon effective to a plurality of shops to manage a coupon issued from one shop which uses one client of said plurality of clients to a user who uses another client (2); and
a code representative of a coupon aggregation step of calculating, when said coupon is used by said user at another shop managed by use of a further client (3), a retail cost rebate between said one shop and said another shop in accordance with an issue and use situation of said coupon.

22. A program file inputted to a server (1) connected to a plurality of clients (2, 3, 3') through a network (4), comprising:
a coupon management step of defining a coupon effective to a plurality of shops to manage a coupon issued from one shop which uses one client of said plurality of shops to a user who uses other client (2); and
a coupon aggregation step of calculating, when said coupon is used by said user at another shop who uses a further client (3), a retail cost rebate between said one client and said further client in accordance with an issue and use situation of said coupon.

23. A program file according to claim 22, further comprising:
an information setting step of setting therein an ID of a shop at which a coupon can be issued, and temporal information on a time period during which said coupon can be issued, prior to the definition of said coupon by said coupon management step.
